(19) Europäisches Patentamt
European Patent Office
Office européen des brevets

(11) **EP 2 901 547 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
*H02P 25/02* *(2016.01)*    *H02P 25/26* *(2006.01)*
*H02P 27/05* *(2006.01)*    *H02P 9/00* *(2006.01)*
*H02P 21/00* *(2016.01)*    *H02K 3/26* *(2006.01)*

(21) Anmeldenummer: **13756324.3**

(22) Anmeldetag: **02.09.2013**

(86) Internationale Anmeldenummer:
**PCT/EP2013/002623**

(87) Internationale Veröffentlichungsnummer:
**WO 2014/048537 (03.04.2014 Gazette 2014/14)**

(54) **VERFAHREN ZUM BETREIBEN EINER ELEKTROMASCHINE**

METHOD FOR OPERATING AN ELECTRIC MACHINE

PROCÉDÉ POUR FAIRE FONCTIONNER UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2012 DE 102012018889**
**12.03.2013 DE 102013004191**

(43) Veröffentlichungstag der Anmeldung:
**05.08.2015 Patentblatt 2015/32**

(73) Patentinhaber: **SEW-EURODRIVE GmbH & Co. KG**
**76646 Bruchsal (DE)**

(72) Erfinder:
• **SCHMIDT, Josef**
**76676 Graben-Neudorf (DE)**
• **SIMON, Olaf**
**76646 Bruchsal (DE)**
• **SCHUMANN, Christian**
**66892 Bruchmühlbach-Miesau (DE)**
• **STEIN, Edgar**
**66892 Bruchmühlbach-Miesau (DE)**

(56) Entgegenhaltungen:
EP-A1- 0 884 835     EP-A2- 0 918 012
WO-A1-2012/101630    DE-A1- 19 506 006
DE-A1- 19 756 955    GB-A- 1 439 372

• **MERIEM ABDELLATIF,MARIA PIETRZAK-DAVID,ILHEM SLAMA-BELKHODJA: "Sensitivity of the Currents Input-Output Decoupling Vector Control of the DFIM versus Current Sensors Fault", POWER ELECTRONICS AND MOTION CONTROL CONFERENCE 2008 (EPE-PEMC 2008), 1. September 2008 (2008-09-01), - 3. September 2008 (2008-09-03), Seiten 938-944, XP002725473, Poznan ISBN: 978-1-4244-1742-1**

EP 2 901 547 B1

**Beschreibung**

Die Erfindung betrifft ein Verfahren zum Betreiben einer Elektromaschine und einen Elektromotor.

Es ist allgemein bekannt, dass ein Gleichstrommotor einen mechanisch betriebenen Kommutator benötigt. Der Rotor weist eine Wicklung auf.

Bei Synchronmotoren ist bekannt, auf dem Rotor Dauermagnete vorzusehen, die üblicherweise einen magnetischen Rückschluss aufweisen, also zur Schaffung des Rückschlusses ein Blechpaket am Rotor vorgesehen ist. Der Rotor ist somit nicht eisenlos.

**Aus der Veröffentlichung** Poddar, G. ; Ranganathan, V.T.: Sensorless double-inverterfed wound-rotor induction-Machine drive. In: IEEE Transactions on Industrial Electronics 53 (2005), Feb., Nr. 1, S. 86 - 95
*ist bekannt, bei einer zweiseitig eingespeisten und zweiseitig eisenbehafteten Elektromaschine rotorseitig eine U/f-Steuerung vorzusehen und statorseitig eine feldorientierte Regelung. Dabei wird auf die gewünschte mechanische Drehzahl* Ω *hingeregelt, während die elektrischen Frequenzen, also die elektrischen Drehfrequenzen des rotorseitigen und statorseitigen Drehfeldes eine Minimalfrequenz nicht unterschreiten. Hierzu wird eine hysteresebehaftete Kennlinie verwendet, die jedoch Eisenverluste zur Folge hat.*

Aus der DE 195 05 006 A1 ist ein Antrieb mit einem Drehstrom-Asynchronmotor mit Schleifringläufer bekannt.

Aus der Veröffentlichung "Sensitivity of the Currents Input-Output Decoupling Vector Control of the DFIM versus Current Sensors Fault" (2008) ist eine doppelt gespeiste Asynchronmaschine bekannt.

Aus der EP 0 884 835 A1 ist ein Verfahren zur Regelung einer geberlosen feldorientiert betriebenen Asynchronmaschine bekannt.

Aus der DE 197 56 955 A1 ist ein Verfahren zur modellgestützten Berechnung des Drehmoments von Drehstromasynchronmotoren mit Hilfe des Statorstroms, der Statorspannung und der mechanischen Drehzahl bekannt.

Aus der EP 0 918 012 A2 ist eine durch einen Elektromotor servounterstützte Positioniervorrichtung bekannt.

Aus der GB 1 439 372 ist ein Regelsystem für das rotierende Feld einer Elektromaschine bekannt.

Aus der WO 2012 / 101 630 A1 ist eine Axialflussmaschine bekannt.

Der Erfindung liegt daher die Aufgabe zugrunde, einen Elektromotor weiterzubilden, insbesondere mit hohem Wirkungsgrad.

Erfindungsgemäß wird die Aufgabe bei den Verfahren nach den in Anspruch 1 und 2 und bei dem Elektromotor nach den in Anspruch 11 angegebenen Merkmalen gelöst. Wichtige Merkmale bei dem Verfahren zum Betreiben einer Elektromaschine, welche einen gegenüber einem Stator relativ bewegbaren Läufer, insbesondere Rotor, aufweist, sind, dass die mechanische, zum Stator relative Geschwindigkeit des Läufers, insbesondere Drehgeschwindigkeit des Rotors, erfasst oder geschätzt wird, insbesondere von einer Steuerelektronik,

wobei am Läufer eine Wicklung, insbesondere Rotorwicklung, angeordnet ist, die als Drehfeldwicklung ausgeführt ist,
wobei am Stator eine Statorwicklung angeordnet ist, die ebenfalls als Drehfeldwicklung ausgeführt ist,
wobei jede Drehfeldwicklung von einem jeweiligen Wechselrichter gespeist wird, insbesondere also die läufer- oder rotorseitige Drehfeldwicklung von einem läufer- oder rotorseitigen Wechselrichter und die statorseitige Drehfeldwicklung von einem statorseitigen Wechselrichter,
**wobei** aus der mechanischen Geschwindigkeit gemäß einer Kennlinie eine elektrische Frequenz $\omega_{S,Soll}$ der vom statorseitigen Wechselrichter an die Statorwicklung gespeisten Spannung, insbesondere die elektrische Frequenz des statorseitig erzeugten Drehfeldes, insbesondere also die **Statorspeisefrequenz,** bestimmt wird,
insbesondere wobei die Kennlinie einen hysteresebehaftete Abhängigkeit der elektrischen Frequenz $\omega_{S,Soll}$ von der mechanischen Geschwindigkeit darstellt,
wobei die Kennlinie derartig ausgeführt ist, dass die **Statorspeisefrequenz auf weniger als eine Minimalfrequenz, insbesondere auf Null Hertz, abgesenkt ist in einem Drehzahlbereich zumindest von** $\Omega_{min}$ **bis** $\Omega_0$,
**wobei** $\Omega_{min}$ **eine erste Drehzahl ist und**
**wobei** $\Omega_0$ **eine zweite Drehzahl ist, wobei der Betrag der zweiten Drehzahl** $\Omega_0$ **größer ist als der Betrag der ersten Drehzahl,**
**insbesondere wobei der von der Hysterese überdeckte Drehzahlbereich betragsmäßig kleiner ist als der Betrag der ersten Drehzahl** $\Omega_{min}$.

Von Vorteil ist dabei, dass durch die Absenkung Verlustleistungen verringert werden, insbesondere Eisenverluste. Weiterer Vorteil ist, dass kleine mechanische Drehzahlen oder sogar bei Stillstand der Rotorwelle die Rotorspeisefrequenz und Statorspeisefrequenz nicht verschwinden sondern über einem Minimalwert bleiben. Denn die mechanische Drehzahl wird durch die Differenz der rotorseitigen und statorseitigen Speisefrequenzen bestimmt. Somit ist eine kleine Differenz auch mit großen Speisefrequenzen erreichbar. Hieraus ergibt sich der Vorteil, dass offene, also nicht rückgekoppelte Integrationen in einer Regelung verwendbar sind, ohne dass ein Divergieren stattfindet.

Bei einer vorteilhaften Ausgestaltung werden jeweils Halbleiterschaltern des jeweiligen Wechselrichters von einer Steuerelektronik Ansteuersignale zugeführt, wobei die jeweilige Steuerelektronik eine Regelvorrichtung aufweist. Von Vorteil ist dabei, dass rotorseitig und statorseitig jeweils ein Wechselrichter mit zugehöriger Steuerelektronik angeordnet ist. Auf diese Weise ist eine gute Regelbarkeit der Elektromaschine erreichbar und außerdem ein größerer Stellbereich und eine größere Dynamik bei der Regelung.

Bei einer vorteilhaften Ausgestaltung weist die statorseitige Regelvorrichtung eine U/f-Steuerung auf. Von Vorteil ist dabei, dass ein sensorloses und somit einfaches Reglerkonzept ermöglicht ist.

Bei einer vorteilhaften Ausgestaltung weist die läuferseitige oder rotorseitige Regelvorrichtung eine feldorientierte Regelung auf. Von Vorteil ist dabei, dass eine feldorientierte Regelung einfach aufbaubar ist, insbesondere ohne rückgekoppelte Integrierglieder, und trotzdem bei kleinen Drehzahlen anwendbar ist. Denn im Stand der Technik sind bei feldorientierten Regelungen für niedrige Drehzahlen und somit Speisefrequenzen bis zum Quasi-Stillstand besondere aufwendige Zusatzmaßnahmen in der Regelung notwendig. Bei der Erfindung hingegen sind diese Maßnahmen verzichtbar, da die Speisefrequenzen oberhalb kritischer Minimalwerte bleiben.

Bei einer vorteilhaften Ausgestaltung ist die **Minimalfrequenz der Statorspeisefrequenz 0 Hz.** Von Vorteil ist dabei, dass die Eisenverluste im Stator verminderbar oder sogar gänzlich verhinderbar sind.

Bei einer vorteilhaften Ausgestaltung ist **die erste Drehzahl $\Omega_{min}$ derart gewählt, dass offene und/oder nicht rückgekoppelte Integrationen der feldorientierten, insbesondere zeitdiskret ausgeführten, insbesondere numerisch arbeitenden, Regelung nicht divergieren.** Von Vorteil ist dabei, dass durch die Vermeidung von niedrigen rotorseitigen und statorseitigen Speisefrequenzen unterhalb der ersten Drehzahl nicht rückgekoppelte Integrationen verwendbar sind. **Rundungsfehler, die bei insbesondere bei zeitdiskreten Reglerstrukturen auftreten, führen somit zu keiner wesentlichen Abweichung bei der Rotorlagebestimmung.**

Bei einer vorteilhaften Ausgestaltung ist **die erste Drehzahl $\Omega_{min}$ derart gewählt, dass die gemäß Kennlinie und Regelung sich einstellende elektrische rotorseitige Speisefrequenz $\omega_{r,\,min}$** einen Minimalwert nicht unterschreitet, insbesondere wobei der Minimalwert zwischen 1 Hz und 20 Hz beträgt, insbesondere zwischen 10 Hz und 15 Hz. Von Vorteil ist dabei, dass die feldorientierte Regelung mit einem recht einfachen Maschinenmodell ausführbar ist, also kein großer Aufwand an mathematischer Modellierung notwendig ist.

Bei einer vorteilhaften Ausgestaltung ist die zweite Drehzahl $\Omega_0$ die synchrone Drehzahl einer einseitig gespeisten Elektromaschine oder die zweite Drehzahl $\Omega_0$ gleicht der Hälfte der synchronen Drehzahl der zweiseitig gespeisten Elektromaschine, wenn die Stator- und Rotorfrequenzen gleich groß sind und jeweils der einer einseitig gespeisten Drehfeldmaschine entsprechen. Von Vorteil ist dabei, dass über einen weiten Drehzahlbereich Eisenverluste verringerbar sind.

Bei einer vorteilhaften Ausgestaltung wird als rotorseitig vorgegebener Sollwert für den magnetisierungsbildenden Stromanteil Null vorgegeben, insbesondere zur Reduktion von Verlustleistung. Von Vorteil ist dabei, dass eine eisenlose Wicklung rotorseitig verwendbar ist und somit keine Magnetisierung rotorseitig erzeugt werden muss. Somit sind auch rotorseitige Eisenverluste vermieden.

Bei einer vorteilhaften Ausgestaltung wird die U/f-Steuerung die Abweichung der mechanischen erfassten oder geschätzten Drehzahl zum vorgegebenen Drehzahl-Sollwert einem Reglerglied zugeführt, das als Ausgangssignal den Sollwert des rotorseitigen momentbildenden Stromanteils erzeugt, wobei die Abweichung zwischen diesem Sollwert und dem Istwert des momentbildenden rotorseitigen Stromanteils eine Reglerglied, insbesondere Integrierglied, zugeführt wird, aus dessen Ausgangssignal ein Spannungswert, insbesondere die Komponente des Spannungsraumzeigers in Richtung des momentbildenden Stromanteils, bestimmt wird, insbesondere unter Aufsummation des $e_q$-Signals. Von Vorteil ist dabei, dass der zu stellende Spannungsraumzeiger, welcher am rotorseitigen Wechselrichter ausgangsseitig bereit gestellt wird zur Speisung der rotorseitigen Wicklung, in einfacher Weise aus den erfassten Werten bestimmbar ist, insbesondere aus der erfassten Drehzahl und dem erfassten Strom.

Bei einer vorteilhaften Ausgestaltung weist die rotorseitig angeordnete feldorientierte Regelung Integrierglieder auf, aus deren Ausgangssignalen der Feldorientierungswinkel bestimmt wird, insbesondere unter Aufsummation eines Anteils des Stromraumzeigers auf den durch die Ausgangssignale dargestellten Raumzeiger. Von Vorteil ist dabei, dass keine Rückkopplung der Integrierglieder notwendig ist, da die Speisefrequenzen stets hoch genug sind, so dass ein Divergieren der Integrationsergebnisse vermeidbar sind.

Wichtige Merkmale der Erfindung bei dem Elektromotor sind, dass er einen Stator und einen relativ zum Stator drehbar angeordneten Rotor aufweist, wobei der Rotor einen Aktivbereich aufweist, insbesondere zur Drehmomenterzeugung bei Wechselwirkung des Aktivbereichs mit dem vom Stator erzeugten Magnetfeld, **wobei** der Aktivbereich elektrisch bestrombare Leiterbahnen einer Multilayer-Leiterplatte, insbesondere also einer mehrlagigen Leiterplatte, aufweist.

Von Vorteil ist dabei, dass ein eisenloser Scheibenläufermotor als Drehfeldmaschine ausführbar ist, wobei eine mehrsträngige Rotorwicklung des erfindungsgemäßen Elektromotors als Drehstromwicklung in Form einer eisenlosen Luftspaltwicklung ausführbar ist, die als Leiterbahnen einer Leiterplatte ausführbar ist. Somit muss bei der Herstellung keine Wicklung gewickelt werden sondern nur eine Leiterplatte mit entsprechenden Leiterbahnen versehen werden. Die aufwendige Herstellung von gewickelten Rotoren entfällt somit. Durch den mehrlagigen Aufbau der Leiterplatte ist auch ein komplexes Wicklungsschema in einfacher Weise realisierbar. Ein mechanischer Kommutator ist verzichtbar. Der Stator ist entweder mittels Dauermagneten permanenterregt oder er weist eine Statorwicklung auf, so dass er elektrisch erregbar ist.

Durch die erfindungsgemäße eisenlose Luftspaltwicklung existieren außerdem keine magnetischen Vorzugsstellungen über dem Verdrehwinkel des Rotors relativ zum Stator. Insbesondere rastet der Rotor nicht, wie bei gewöhnlichen Synchronmaschinen. Daher ist ein sehr gleichförmiger Rundlauf erreichbar. Außerdem sind Eisenverluste im Rotor der Maschine vermeidbar.

Bei einer vorteilhaften Ausgestaltung ist die Leiterplatte drehfest mit dem Rotor verbunden, insbesondere wobei die Leiterplatte drehfest mit einem Wellenabschnitt des Rotors verbunden ist, insbesondere wobei der Rotor über Lager gelagert ist, die in einem Teil, insbesondere Gehäuseteil, aufgenommen sind, welches fest mit dem Stator, insbesondere den Statorkernen, verbunden sind. Von Vorteil ist dabei, dass zur Herstellung des Rotors nur eine Leiterplatte herzustellen ist, die mit dem Rotor verbunden ist, insbesondere bei der Fertigung beispielsweise aufgesteckt wird.

Bei einer vorteilhaften Ausgestaltung bilden die Leiterbahnen der Multilayer-Leiterplatte eine Drehfeldwicklung. Von Vorteil ist dabei, dass das Layout der Leiterplatte derart ausführbar ist, dass eine Drehfeldwicklung realisierbar ist.

Bei einer vorteilhaften Ausgestaltung weist der Stator Dauermagnete auf, insbesondere deren Magnetisierungsrichtung jeweils parallel zur Drehachse des Rotors ausgerichtet sind, insbesondere axial ausgerichtet sind. Von Vorteil ist dabei, dass der Stator ohne großen Aufwand herstellbar und betreibbar ist. Insbesondere ist keine Bestromung des Stators notwendig, da die Dauermagnete ein axial gerichtetes Magnetfeld erzeugen.

Bei einer vorteilhaften Ausgestaltung weist der Stator eine Statorwicklung auf zur Erzeugung eines Drehfeldes, insbesondere wobei die Statorwicklung eine Drehfeldwicklung ist. Von Vorteil ist dabei, dass durch die geeignete Bestromung der Statorwicklung mit einem Wechselstrom, insbesondere mit einem mehrphasigen Wechselstrom, ein Drehfeld erzeugbar ist.

Bei einer vorteilhaften Ausgestaltung verlaufen die im Aktivbereich angeordneten Leiterbahnen radial und/oder erstrecken sich radial. Von Vorteil ist dabei, dass das vom Stator erzeugte Magnetfeld axial gerichtet sein darf, um einen hohen Wirkungsgrad bei der Drehmomenterzeugung erreichbar zu machen.

Bei einer vorteilhaften Ausgestaltung schließt sich an den Aktivbereich radial innen und radial außen jeweils ein Umlenkbereich an, insbesondere wobei die Leiterbahnen einer jeweiligen Lage in einem Umlenkbereich jeweils enden in einer axial gerichteten Durchkontaktierung, insbesondere axial gerichteten durchkontaktierten Bohrung der Leiterplatte, insbesondere zur elektrischen Verbindung von Leiterbahnen verschiedener Lagen. Von Vorteil ist dabei, dass die Durchkontaktierungen und der Umlenkbereich radial außerhalb oder innerhalb, also radial angrenzend oder beabstandet, von dem Hauptfeld des von der Statorwicklung erzeugten Magnetfeldes angeordnet sind.

Es ist außerdem möglich auf die Durchkontaktierungen zu verzichten, falls pro Lage nur ein Strang ausgeführt wird.

Bei einer vorteilhaften Ausgestaltung weist der Stator einen oder zwei sich axial gegenüber stehende Statorkerne auf. Von Vorteil ist dabei, dass ein geringes Streufeld erreichbar ist, indem die zahnartigen Vorsprünge aufeinander zu ausgerichtet angeordnet sind, also ein möglichst geringer Luftspalt zwischen den jeweils sich gegenüberstehenden zahnartigen Vorsprüngen vorhanden ist.

Bei einer vorteilhaften Ausgestaltung sind am Statorkern zahnartige Vorsprünge ausgebildet, die in Umfangsrichtung voneinander regelmäßig beabstandet sind, insbesondere und auf gleichem Radialabstand angeordnet sind, wobei die Statorwicklung Einzelwicklungen aufweist, insbesondere aus Einzelwicklungen gebildet ist, wobei jede Einzelwicklung auf einem jeweiligen zahnartigen Vorsprung aufgesteckt angeordnet ist, insbesondere wobei das aus den Einzelwicklungen erzeugte Magnetfeld im Wesentlichen axial gerichtet ist, insbesondere wobei das aus den Einzelwicklungen erzeugte Hauptfeld des Magnetfelds axial gerichtet ist. Von Vorteil ist dabei, dass eine Statorwicklung in einfacher Weise aus aufgesteckten Einzelzahnwicklungen zusammensetzbar ist. Somit sind einander sich gleichende Einzelzahnwicklungen aus einem Lager verwendbar.

Wenn die Statorhälften verdreht sind ist das Feld nicht rein axial gerichtet und der wirksame Luftspalt wird größer, sowie die Streuung. Dafür ergibt sich der Vorteil der doppelten Nutzzahl.

Alternativ zu den Einzelwicklungen ist auch eine Schleifenwicklung oder Wellenwicklung ausführbar.

Bei einer vorteilhaften Ausgestaltung ist der jeweilige Statorkern topfartig ausgeformt, wobei die zahnartigen Vorsprünge am Topfrand angeordnet sind, insbesondere wobei der Statorkern jeweils aus SMC Material gefertigt ist. Von Vorteil ist dabei, dass das Magnetfeld, insbesondere der Hauptfeldanteil, geschlossen in zwei sich axial gegenüberstehenden, zueinander spiegelsymmetrisch zu einer zwischen den beiden Statorkernen angeordneten Ebene angeordneten Statorkerne führbar ist mit Ausnahme des Luftspalts zwischen den beiden Statorkernen.

Bei Dauermagneterregung ist die Ausführung des Stators auch aus Eisen oder Stahl möglich. SMC wird nur bei elektrischer Erregung verwendet, da sich die Richtung des magnetischen Flusses ändert und in massivem Stahl sehr große Wirbelströme, also auch Verluste, auftreten würden.

Bei einer vorteilhaften Ausgestaltung weist die Leiterplatte einen kreisförmigen radialen Außenrand auf. Von Vorteil ist dabei, dass keine Unwucht von der Leiterplatte verursacht wird.

Bei einer vorteilhaften Ausgestaltung sind die Leiterbahnen aus Kupfer oder einem Kupferhaltigem Werkstoff und/oder sind die Leiterbahnen der inneren Lagen der Leiterplatte in einem elektrisch isolierenden Trägermaterial eingebettet, insbesondere wobei das Trägermaterial zumindest Epoxidharz aufweist. Von Vorteil ist dabei, dass eine einfache Fertigung, insbesondere auch eine Massenfertigung, ausführbar ist.

Bei einer vorteilhaften Ausgestaltung ist die Leiterplatte mit elektronischen Bauteilen einer elektronischen Schaltung bestückt, insbesondere auf kleinerem Radialabstand als der Aktivbereich und/oder als die Umlenkbereiche angeordnet sind. Von Vorteil ist dabei, dass das Drehmoment auf einem größeren Radialabstand erzeugbar ist als die elektronische Schaltung angeordnet ist. Somit ist auch die durch die elektronische Schaltung bewirkte Erhöhung des Trägheitsmoments gering. Vorteilhafterweise ist die Bestückung der Leiterplatte automatisiert ausführbar und somit mit geringem Kostenaufwand eine Leistungsstellende Anordnung auf dem drehenden Teil, also Rotor, anordenbar.

Bei einer vorteilhaften Ausgestaltung ist der Aktivbereich, die Rotorwicklung und/oder die elektronische Schaltung elektrische Leistung über eine induktive Kopplung zuführbar,
insbesondere wobei der Rotor mit einer Sekundärwicklung verbunden ist, die induktiv an eine mit dem Stator verbundene, insbesondere drehfest verbundene, Primärwicklung gekoppelt ist, insbesondere wobei die Sekundärwicklung axial beabstandet ist von der Leiterplatte,
insbesondere wobei Sekundärwicklung und Primärwicklung als Ringwicklungen ausgeführt sind, insbesondere deren Wickelachse parallel zur Rotorachse ausgerichtet ist,
insbesondere wobei in die Primärwicklung von einer elektrischen Einspeisung ein mittelfrequenter Strom eingeprägt wird, insbesondere wobei die Einspeisung einen Gyrator aufweist, insbesondere wobei der Gyrator als Vierpol ausgeführt ist und zumindest eine derartige Kapazität und mindestens eine derartige Induktivität aufweist, dass die zugehörige Resonanzfrequenz der eingeprägten Mittelfrequenz im Wesentlichen gleicht,
insbesondere wobei der Sekundärwicklung eine Kapazität in Reihe oder parallel zugeschaltet ist, so dass die zugehörige Resonanzfrequenz im Wesentlichen der Mittelfrequenz entspricht. Von Vorteil ist dabei, dass auch bei Schwankungen der induktiven Kopplung ein im Wesentlichen unverändert hoher Wirkungsgrad bei der induktiven Energieübertragung von der Primärwicklung an die Sekundärwicklung erreichbar ist. **Der Gyrator wandelt ein eingangsseitig angeordnetes spannungsquellenartiges Verhalten der ihn speisenden Quelle in ein ausgangsseitig an ihm angeordnetes stromquellenartiges Verhalten um. Hierzu weist er eine Induktivität oder eine Reihenschaltung von Induktivitäten zwischen einer Eingangsklemme und einer Ausgangsklemme des Vierpols auf und eine Kapazität zwischen einer Klemme einer oder der Induktivität und der Eingangsklemme oder Ausgangsklemme des Vierpols auf. Alternativ sind auch statt der Induktivität und Kapazität vertauscht. Die Dimensionierung der Kapazität und Induktivität ist dabei - wie oben erwähnt - auf Resonanz ausgelegt, so dass eine eingangsseitig angelegte Wechselspannung mit dieser Resonanzfrequenz einen ausgangsseitig austretenden Wechselstrom erzeugt.**
Bei weiteren vorteilhaften Ausgestaltungen ist die Sekundärwicklung des Übertragers ebenfalls als Platine ausgeführt, um die Trägheit des Rotors gering zu halten. Für die somit primärseitigen und/oder statorseitigen Planartransformatorwicklungen wird dann jeweils trotzdem die beschriebene konzentrische Ringwicklung mit magnetischem Rückschluss verwendet.

Bei einer vorteilhaften Ausgestaltung ist dem Aktivbereich, der Rotorwicklung und/oder der elektronischen Schaltung elektrische Leistung über eine Schleifversorgung, insbesondere eine mehrphasige Schleifversorgung, zuführbar. Von Vorteil ist dabei, dass eine wenig aufwendige Energieübertragung einsetzbar ist, die allerdings verschleißbehaftet ist.

Weitere Vorteile ergeben sich aus den Unteransprüchen. Die Erfindung ist nicht auf die Merkmalskombination der Ansprüche beschränkt. Abwandlungen und Modifikationen sind möglich im Rahmen der angehängten Ansprüche. Die Erfindung wird nun anhand von Abbildungen näher erläutert:

In der Figur 1 ist ein schematischer Querschnitt durch einen erfindungsgemäßen Antrieb mit Leiterplatte 1 gezeigt.

In der Figur 2 ist die Leiterplatte 1 in schematischer Draufsicht gezeigt.

In der Figur 3 ist ein erfindungsgemäßes Wickelschema für eine erste Phase U in einer ersten Lage der Multilayer-Leiterplatte dargestellt.

In der Figur 4 ist ein erfindungsgemäßes Wickelschema für die erste Phase U in einer zweiten Lage der Multilayer-Leiterplatte dargestellt.

In der Figur 5 ist eine Schleifversorgung der Rotorwicklung gezeigt, wobei ein dreiphasiger Drehstrom übertragen wird.

In der Figur 6 ist eine einphasige induktive Versorgung der Rotorwicklung gezeigt.

In der Figur 7 ist eine Draufsicht auf den mit Stator gezeigt, bei dem eine Einzelzahnbewicklung ausgeführt ist.

In der Figur 8 ist eine zur Figur 7 zugehörige Seitenansicht gezeigt.

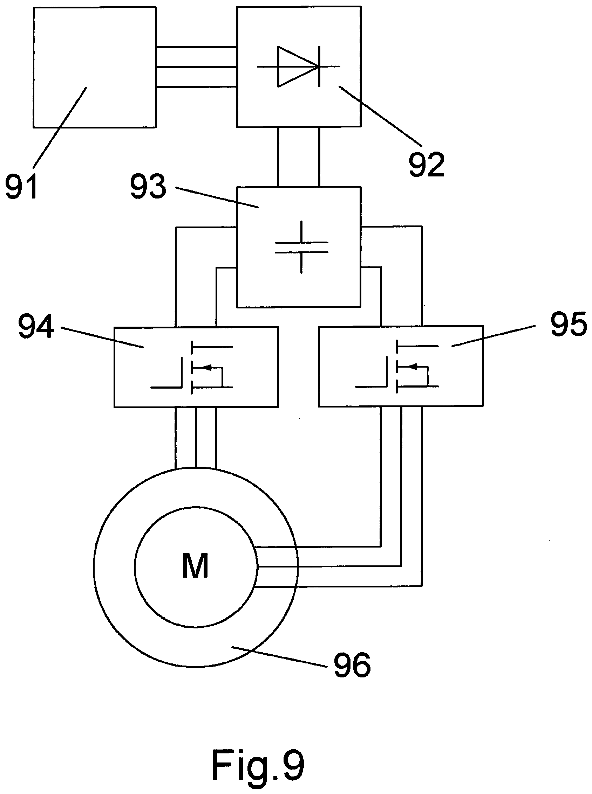

In der Figur 9 ist die elektrische Versorgung der zweiseitig speisbaren Elektromaschine, also des Antriebs, schematisch gezeigt.

In der Figur 10 die Differenz der rotorseitig elektrisch eingespeisten Frequenz $\omega_r$ und der statorseitig elektrisch eingespeisten Frequenz $\omega_s$ als Funktion der mechanischen Drehzahl $\Omega$, also als Funktion der mechanischen vorgegebenen Solldrehzahl $\Omega_{Soll}$ gezeigt.

In der Figur 11 ist eine hysteresebehaftete Kennlinie der rotorseitig elektrisch eingespeisten Frequenz $\omega_r$ als Funktion der mechanischen Drehzahl $\Omega$ dargestellt.

In der Figur 12 ist die zugehörige hysteresebehaftete Kennlinie der statorseitig elektrisch eingespeisten Frequenz $\omega_s$ als Funktion der mechanischen Drehzahl $\Omega$ dargestellt, wobei über einen großen Drehzahlbereich hinweg der Wert $\omega_s=0$ vorgesehen ist und somit Eisenverluste reduzierbar sind. Der Drehzahlbereich reicht hierbei von einer der minimalen Rotorfrequenz $\omega_{r,\,min}$ entsprechenden Drehzahl $\Omega$ bis zu der synchronen Drehzahl $\Omega_0$.

In der Figur 13 ist die rotorseitige feldorientierte Regelung gezeigt, wobei aus den erfassten Ausgangsströmen und der erfassten Ausgangsspannung der Feldorientierungswinkel $\varphi_S$ und die Komponente $\Psi_{sd}$ bestimmt wird.

In der Figur 14 ist die rotorseitige Regelstrecke zum Hinregeln der mechanischen Drehzahl $\Omega_{ist}$ auf den Sollwert $\Omega$ hin gezeigt.

In der Figur 15 ist die statorseitige U/f-Steuerung und der Magnetisierungsstromregler (Regler für $i_{sd}$) dargestellt, wobei in einer Lookup-Table die hysteresebehaftete Kennlinie der statorseitig elektrisch eingespeisten Frequenz $\omega_s$ als Funktion der mechanischen Drehzahl $\Omega$ hinterlegt ist, so dass aus der Drehzahlvorgabe eine Spannungskomponente $U_{sq}$ bestimmbar ist

In Figur 16 ist die Definition von Winkeln veranschaulicht.

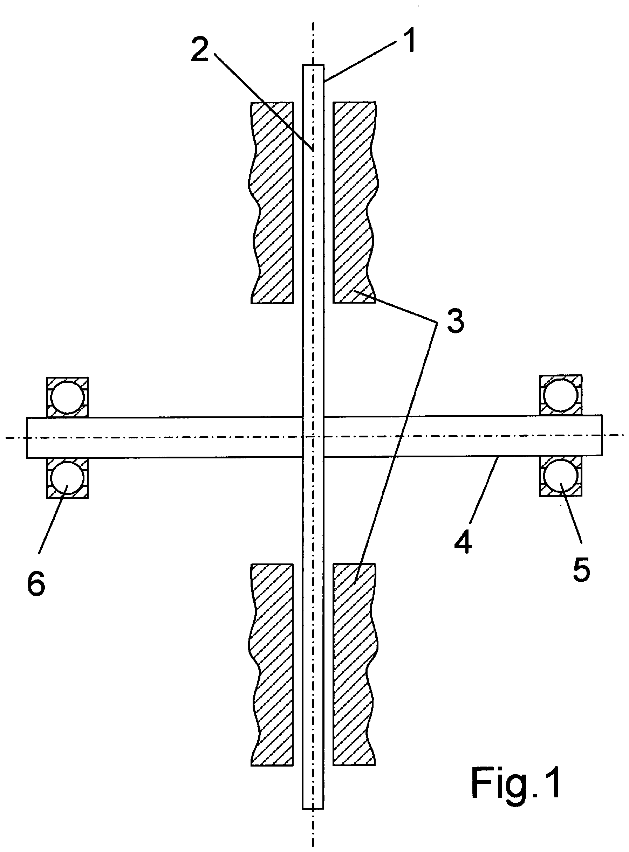

Wie in Figur 1 gezeigt weist der erfindungsgemäße Antrieb eine über Lager 5 und 6 gelagerte Welle 4 auf, wobei die Lager 5 und 6 beispielsweise in einem Gehäuseteil aufgenommen sind.

Eine Leiterplatte 1, insbesondere Multilayer-Leiterplatte, ist mit der Welle 4 drehfest verbunden, wobei die Normalenrichtung der Leiterplattenebene parallel zur Wellenachse der Welle 4 ausgerichtet ist.

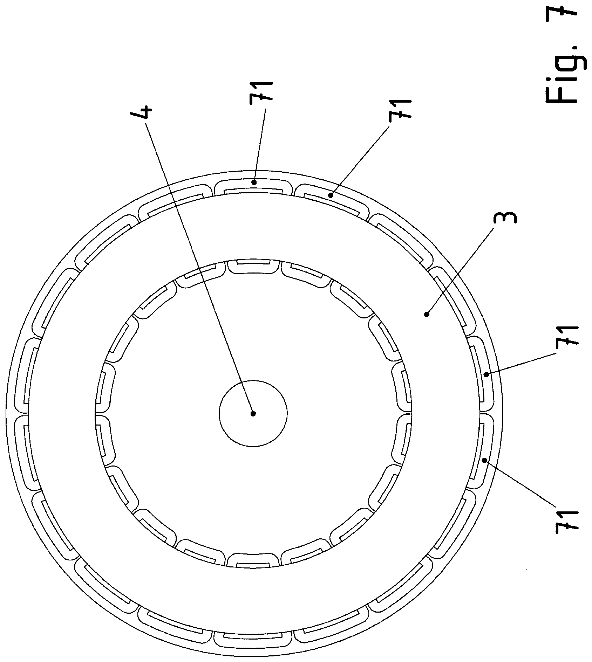

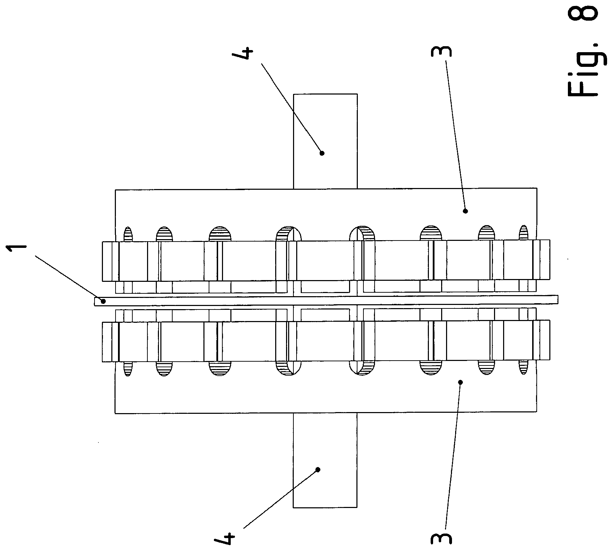

Wie auch in Figur 7 und 8 gezeigt, sind die Statorkerne 3 in Wellenachsrichtung axial vor und hinter der Leiterplatte 1 angeordnet. Die Statorkerne 3 weisen Einzelzahnwicklungen auf, wobei also jeder am jeweiligen Statorkern 3 ausgeformte Zahn eine separate Wicklung aufnimmt.

Jeder Statorkern 3 ist topfartig ausgeformt und weist an seinem Topfrand die in Umfangsrichtung voneinander regelmäßig beabstandeten, axial gerichteten Zahnvorsprünge mit jeweiliger Einzelzahnwicklung auf.

Die Zahnvorsprünge und somit die Einzelzahnwicklungen stehen sich axial gegenüber, so dass das von einer Einzelzahnwicklung erzeugte Magnetfeld größtenteils in einen gegenüberstehenden Zahnvorsprung eingeleitet wird.

Somit ist durch den mittels der Statorkerne 3 gebildeten Stator der Stator einer Axialflussmaschine ausbildbar und ein Drehfeld erzeugbar, das mit einem aktiven Bereich der Leiterplatte 1 zusammenwirkt. Hierzu sind die Einzelzahnwicklungen als Drehfeldwicklung verschaltet und somit entsprechend bestromt.

Der aktive Bereich, also Aktivbereich 22, der Leiterplatte 1 ist ein ringförmiger Teilbereich der Leiterplatte, in welchem die als Leiterbahnen der Leiterplatte ausgeführten Wicklungsleitungen 23 der rotorseitig vorgesehenen Wicklung, radial verlaufen. Der ringförmige Teilbereich ist also durch einen Radialabstandsbereich der Leiterplatte kennzeichenbar. Das von den Zähnen, also Zahnvorsprüngen, der Statorkerne 3 erzeugte Hauptfeld durchdringt den von der Leiterplatte 1 axial überdeckten Bereich. Somit überdecken also die Zähne der Statorkerne 3 denjenigen radialen Bereich, der vom aktiven Bereich der Leiterplatte 1 radial überdeckt wird.

Auf größerem Radialabstand als der aktive Bereich ist der Umlenkbereich 21 angeordnet, insbesondere radial äußerer Umlenkbereich, also Wickelkopfbereich. Auf kleinerem Radialabstand als der aktive Bereich ist der Umlenkbereich 26 angeordnet, insbesondere radial innerer Umlenkbereich, also Wickelkopfbereich.

Bei weiteren erfindungsgemäßen Ausführungsbeispielen ist stehen sich **die Zahnvorsprünge nicht direkt axial gegenüber. Sie können auch um eine halbe Zahnteilung gegeneinander verdreht sein. Vorteiligerweise ergibt sich dann prinzipiell die doppelte nutzbare Nutzzahl. Das Feld ist dann allerdings nicht mehr rein axial gerichtet. Dies ist für einen statorseitigen zweisträngigen Wicklungsaufbau nutzbar.**

**Auf jede der Statorhälften wird dabei ein Strang gewickelt und durch die Verdrehung der Hälften gegeneinander ergibt sich der notwendige geometrische Versatz um einen elektrischen Winkelbetrag von 90°, um ein Drehfeld auszubilden. Die Einzelzahnwicklung am Stator wirkt dann nicht mehr wie eine klassische konzentrierte Wicklung, insbesondere also Bruchlochwicklung, sondern wie eine Ganzlochwicklung. Dies wird in Verbindung mit einer Rotorplatine mit konzentrierten Wicklungen, insbesondere also Bruchlochwicklung, verwendet.**

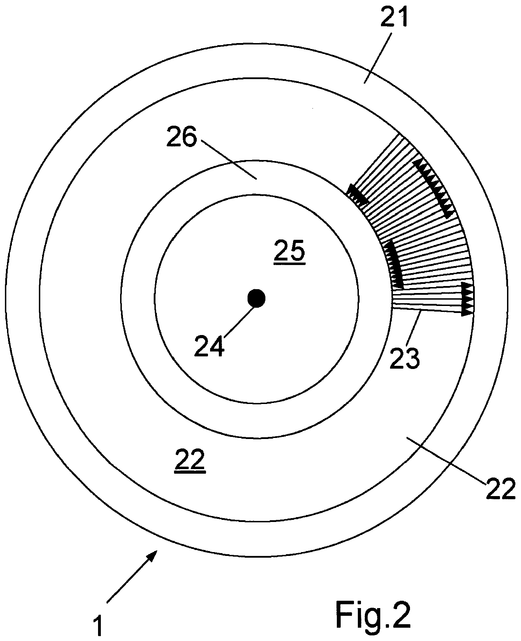

Wie bei dem erfindungsgemäßen Ausführungsbeispiel in Figur 2 ersichtlich, schließen sich die von den Umlenkbereichen 21 und 26 überdeckten Radialbereiche radial direkt an den vom Aktivbereich 22 überdeckten Radialbereich an.

Radial innerhalb des Aktivbereichs 22, insbesondere radial innerhalb des vom Umlenkbereich 26 überdeckten Radialbereichs ist ein mit Bauelementen bestückter Bereich 25 der Leiterplatte 1 angeordnet. Somit ist eine elektronische Schaltung auf der mit der Welle 4 im Verbindungsbereich 24 verbundenen Leiterplatte 1 anordenbar.

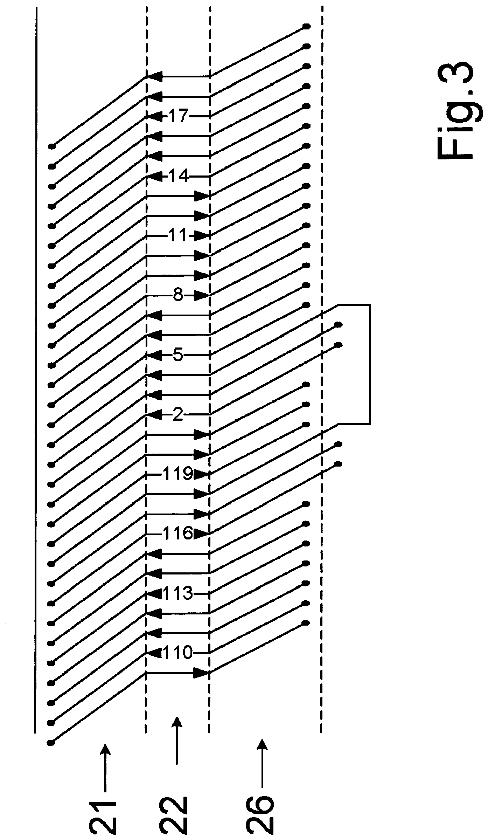

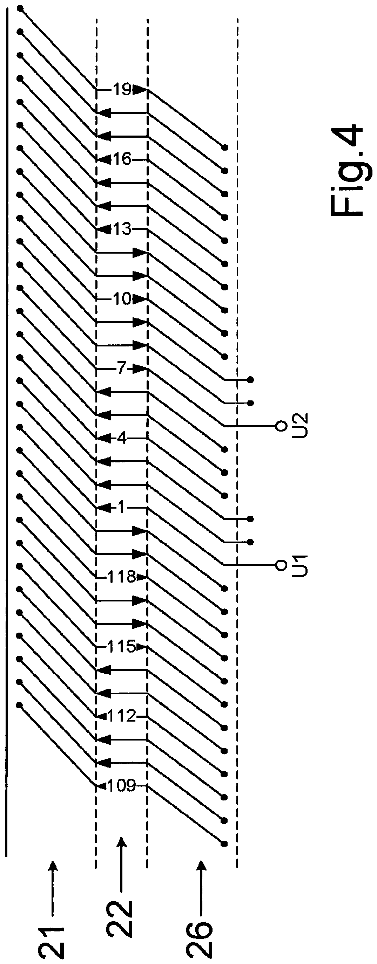

Wie in Figur 3 zusammen mit Figur 4 dargestellt, ist auf der Leiterplatte 1 eine Drehfeldwicklung angeordnet, wobei die Drehfeldwicklung als Schleifenwicklung oder Wellenwicklung ausgeführt ist. Dabei Figur 3 die Leiterbahnen einer ersten Lage, also eines ersten Layers, und Figur 4 die Leiterbahnen einer zweiten Lage, also eines zweiten Layers, zeigt. Die Endpunkte der Leiterbahnen in Figur 3 und 4 sind als Durchkontaktierungen ausgeführt, so dass die Leiterbahnen verschiedener Lagen, also Layer, elektrisch miteinander verbindbar sind.

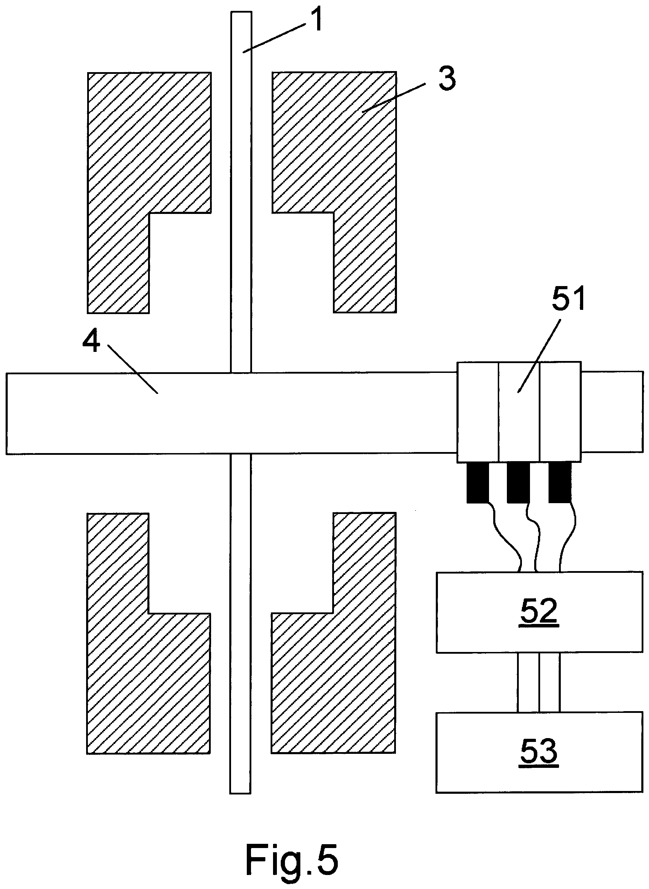

Wie in Figur 5 gezeigt, ist zur Versorgung der auf der Leiterplatte 1 angeordneten Drehfeldwicklung eine Schleifübertragung verwendbar, wobei die Schleifübertragungsmittel 51 für drei Phasen dargestellt sind.

Dabei ist eine Leistungsstufe 52, insbesondere Verstärker, mit Leistungshalbleiterschaltern stationär, also drehfest mit dem Statorkern 3 verbunden, angeordnet, wobei die Leistungsstufe von einer Steuerelektronik 53 mit pulsweitenmodulierten Ansteuersignalen für die Leistungshalbleiterschalter angesteuert wird und der mehrphasige Ausgangsstrom der Leistungsstufe 52 den Schleifübertragungsmitteln 51 zugeführt wird.

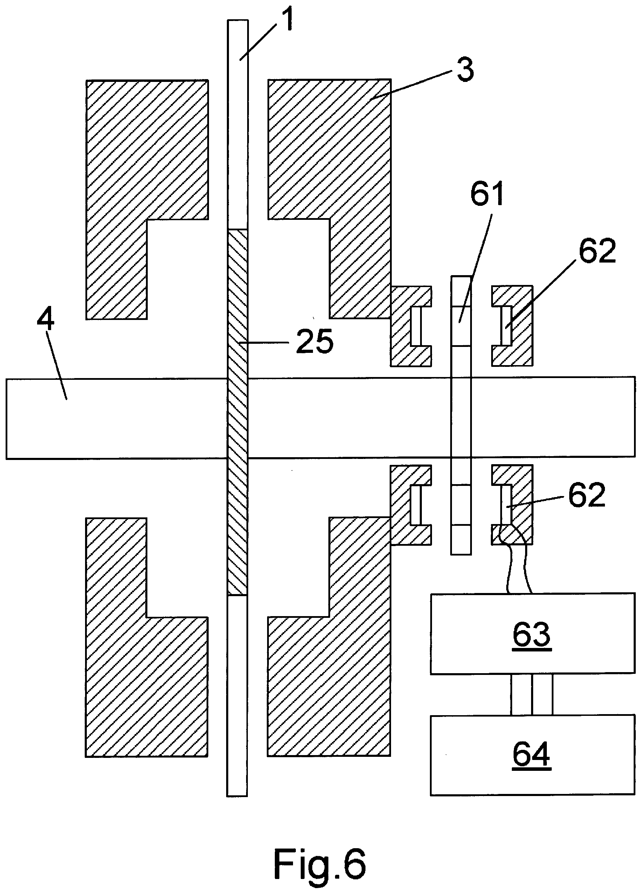

Als alternatives erfindungsgemäßes Ausführungsbeispiel ist statt der Schleifübertragung eine induktive Übertragung in Figur 6 dargestellt.

Hierfür ist eine Sekundärwicklung 61 drehfest mit der Welle 4 verbunden, wobei die auf der Leiterplatte 1 angeordnete elektronische Schaltung elektrisch versorgbar ist über die induktive Kopplung.

Die induktiv mit der Sekundärwicklung 61 gekoppelte Primärwicklung 62 ist drehfest mit einem der Statorkerne 3 verbunden. Die Primärwicklung 62 wird von einem Wechselrichter 63 gespeist, der von einer Steuerelektronik 64 angesteuert wird.

Somit ist in die Primärwicklung 62 ein mittelfrequenter Strom einprägbar, insbesondere mit einer Frequenz zwischen 10 und 1000 kHz, vorzugsweise mit einer Frequenz zwischen 100 und 200 kHz.

Der Sekundärwicklung 61 ist eine Kapazität in Reihe und/oder parallel zuschaltbar, so dass die zugehörige Resonanzfrequenz im Wesentlichen der eingeprägten Mittelfrequenz entspricht. Auf diese Weise sind trotz Schwankungen der induktiven Kopplungsstärke möglichst gleichmäßig hohe Wirkungsgrade erreichbar.

Ein Leistungsstellglied ist auf der Leiterplatte 1 im Bereich 25 vorgesehen. Somit ist der elektrische Leistungsfluss von der Sekundärwicklung 61 über das Leistungsstellglied hin zum aktiven Bereich 22 der Leiterplatte 1 steuerbar. Im Bereich 25 ist außerdem eine Steuerelektronik angeordnet, welche Ansteuersignale für das Leistungsstellglied aufweist. Das Leistungsstellglied ist als Stromrichter ausgeführt. Wegen der räumlichen Nähe zum Aktivbereich 22 ist das Leistungsstellglied sehr niederinduktiv angebunden an den Aktivbereich 22. Die Induktivität der Zuleitung der elektrischen Energie vom Leistungsstellglied zum Aktivbereich 22 ist kleiner als die Induktivität des Aktivbereichs 22 samt Umlenkbereichen 21 und 26, also der Rotorwicklung. Insbesondere ist sie geringer als ein Zehntel der Induktivität der Rotorwicklung.

Des Weiteren werden Strom, Temperatur und/oder Spannung der Rotorwicklung erfasst und der Steuerelektronik im Bereich 25 der Leiterplatte 1 zugeführt.

Wie in Figur 7 und 8 gezeigt, weist jeder der Statorkerne 3 jeweilige Einzelzahnwicklungen 71 auf. Diese sind in Umfangsrichtung gleichmäßig voneinander beabstandet und jeweils auf dem selben Radialabstand angeordnet. Jede Einzelzahnwicklung 71 ist auf einen zahnartigen Vorsprung des Statorkerns 3 aufgesteckt, der somit das Hauptfeld der jeweiligen Einzelzahnwicklung 71 bündelt und axial herausführt zu dem jeweils axial gegenüberstehenden zahnartigen Vorsprung des anderen Statorkerns 3.

Die Zahnspulen sind also als Formspulen auf den jeweiligen zahnartigen Vorsprung aufgesteckt. Die Statorkerne 3 sind als Formteile ausgeführt, insbesondere aus Ferrit oder einem ferromagnetischen Werkstoff ausgeführt. Die magnetischen Eigenschaften der Statorkerne sind isotrop. Als Werkstoff der Statorkerne 3 werden bevorzugt SMC-Magnetkreismaterialien eingesetzt, also Soft-Magnetik-Composite-Materialien.

Bei Dauermagneterregung am Stator wird alternativ Stahl eingesetzt.

Da somit statorseitig eine Drehfeldwicklung vorgesehen ist und rotorseitig ebenfalls eine Drehfeldwicklung im Aktivbereich 22 ausgeführt ist, liegt somit eine zweiseitig eingespeiste Drehfeldmaschine mit eisenlosem Rotor vor. Der Drehzahlstellbereich ist verglichen mit einer einseitig eingespeisten Drehfeldmaschine doppelt so groß, **wenn die Frequenzanteile beide gleich groß sind und jeweils der Speisefrequenz der einseitig gespeisten Drehfeldmaschine entsprechen.**

Die Leiterplatte 1 weist einen kreisförmigen Rand auf. Somit ist sie als Scheibe ausgeführt, insbesondere also Lochscheibe, wobei die Welle 4 in dem mittig angeordneten Loch durchgeführt ist.

Die Leiterplatte 1 weist ein elektrisch isolierendes Trägermaterial auf, wobei hierzu vorzugsweise Epoxidharz verwendet wird. Jede der Lagen, also Layer, weist metallische Leiterbahnen auf, wobei hierzu vorzugsweise Kupfer oder eine Kupfer-haltige Legierung verwendet wird.

Somit ist der Rotor eisenlos ausgeführt, also ohne Blechpaket. Das Trägermaterial weist eine im Wesentlichen mit Luft vergleichbare spezifische magnetische Permeabilität auf. Da das Trägermaterial nur eine geringe Masse aufweist, weist der Rotor insgesamt ein sehr geringes Trägheitsmoment auf.

Die Durchkontaktierungen sind elektrische Verbindungen von in Normalenrichtung der Leiterplatte voneinander beabstandeten Endpunkten der Leiterbahnen. Vorzugsweise wird hierzu ein Bohrloch in die Leiterplatte eingebracht, dessen Wandung metallisiert wird, also mit einer Metallschicht überzogen wird.

Bei weiteren erfindungsgemäßen Ausführungsbeispielen ist als Leiterbahn ein jeweiliges Kupferprofil verwendet, welches in einem elektrisch isolierenden Basismaterial eingebettet ist. Vorzugsweise ist das Kupferprofil aus einem Stanz-Biegeteil oder aus einem Stranggussprofil als Stanz-Biegeteil und das Basismaterial ist Epoxidharz. Das Kupferprofil weist einen dicken Querschnitt auf, so dass eine hohe Stromtragfähigkeit erreichbar ist.

Bei dem erfindungsgemäßen Verfahren wird eine zweiseitig einspeisbare Drehfeldmaschine, wie beispielhaft die oben beschriebene Elektromaschine 96, statorseitig mit einer als Drehfeldwicklung ausgeführten Statorwicklung vorgesehen, die von einem Wechselrichter 94, der statorseitig angeordnet ist, gespeist wird und ein Blechpaket aufweist. Dieser Wechselrichter 94 weist ansteuerbare Leistungshalbleiter auf, deren Ansteuersignale von einer Steuerelektronik erzeugt werden, die einen Regler aufweist. Dabei arbeitet die Regelung des Reglers als U/f-Steuerung.

Rotorseitig ist eine als Drehfeldwicklung ausgeführte eisenlose Rotorwicklung vorgesehen, die von einem weiteren Wechselrichter 95, der rotorseitig angeordnet ist, gespeist wird. Dieser Wechselrichter weist ansteuerbare Leistungshalbleiter auf, deren Ansteuersignale von einer ebenfalls auf dem Rotor angeordneten Steuerelektronik erzeugt werden, die einen Regler aufweist. Dabei arbeitet diese rotorseitig angeordnete Regelung als feldorientierte Regelung.

Die rotorseitige Steuerelektronik samt Wechselrichter 95 ist induktiv oder mittels Schleifübertragung elektrisch versorgt, wie in den Figuren 1 bis 8 beschrieben.

Die Speisung beider Wechselrichter (94, 95) ist aus einem Zwischenkreiskondensator 93 ausführbar, welcher über einen Gleichrichter 92 aus einer Wechselspannungsquelle 91, insbesondere Versorgungsnetz, speisbar ist.

Das Gleichungssystem der Maschine lautet in Raumzeigerdarstellung im allgemeinen Koordinatensystem (hochgestellter Index K):

$$\vec{u}_s^K = R_s \cdot \vec{i}_s^K - j \cdot \frac{d\gamma_s}{dt} \cdot \vec{\Psi}_s^K + \frac{d\vec{\Psi}_s^K}{dt}$$

Statorspannungsgleichung (tiefgestellter Index s)

$$\vec{u}_r^K = R_r \cdot \vec{i}_r^K - j \cdot \frac{d\gamma_r}{dt} \cdot \vec{\Psi}_r^K + \frac{d\vec{\Psi}_r^K}{dt}$$

Rotorspannungsgleichung (tiefgestellter Index r)

$$\vec{\Psi}_s^K = L_s \cdot \vec{i}_s^K + L_h \cdot \vec{i}_r^K$$

Statorflussverkettung (tiefgestellter Index s)

$$\vec{\Psi}_r^K = L_r \cdot \vec{i}_r^K + L_h \cdot \vec{i}_s^K$$

Rotorflussverkettung (tiefgestellter Index r)

$$M_i = \frac{3}{2} p \cdot \frac{L_h}{L_s} \cdot \mathrm{Im}\left\{\vec{\Psi}_s^K \cdot \vec{i}_s^K\right\}$$

Inneres (erzeugtes) Drehmoment Dieses Gleichungssystem kann mittels

$$\varphi_s = -\gamma_r = -\gamma - \gamma_s \quad \text{bzw.} \quad \frac{d\varphi_s}{dt} = -\frac{d\gamma_r}{dt} = -\frac{d\gamma}{dt} - \frac{d\gamma_s}{dt}$$

in ein feldorientiertes Koordinatensystem (hochgestellter Index F) transformiert werden. Anschließend ergibt sich mit $\vec{u}_s^F = u_{sd} + j u_{sq}$ (gilt in gleicher Weise für alle Raumzeiger) die komponentenweise Darstellung, aus der die Regelungsstruktur abgeleitet werden kann zu

$$u_{sd} = \mathrm{Re}\left\{\vec{u}_s^F\right\} = R_s \cdot i_{sd} + \frac{d\Psi_{sd}}{dt}$$

$$u_{sq} = \mathrm{Im}\left\{\vec{u}_s^F\right\} = R_s \cdot i_{sq} + \left(\frac{d\gamma}{dt} + \frac{d\varphi_s}{dt}\right) \cdot \Psi_{sd}$$

$$u_{rd} = \mathrm{Re}\left\{\vec{u}_r^F\right\} = R_r \cdot i_{rd} + \sigma \cdot L_r \cdot \frac{di_{rd}}{dt} \underbrace{- \frac{d\varphi_s}{dt} \cdot \sigma \cdot L_r \cdot i_{rq} + \frac{L_h}{L_s} \cdot \frac{d\Psi_{sd}}{dt}}_{e_d}$$

$$u_{rq} = \mathrm{Im}\left\{\vec{u}_r^F\right\} = R_r \cdot i_{rq} + \sigma \cdot L_r \cdot \frac{di_{rq}}{dt} \underbrace{+ \frac{d\varphi_s}{dt} \cdot \sigma \cdot L_r \cdot i_{rd} + \frac{d\varphi_s}{dt} \cdot \frac{L_h}{L_s} \cdot \Psi_{sd}}_{e_q}$$

$$\Psi_{sd} = \mathrm{Re}\left\{\vec{\Psi}_s^F\right\} = L_s \cdot i_{sd} + L_h \cdot i_{rd}$$

$$\Psi_{sq} = \mathrm{Im}\left\{\vec{\Psi}_s^F\right\} = 0$$

$$i_{rq} = \frac{L_s}{L_h} \cdot i_{sq}$$

$$M_i = \frac{3}{2} p \cdot \frac{L_h}{L_s} \cdot \Psi_{sd} \cdot i_{rq}$$

$$e_d = -\frac{d\varphi_s}{dt} \cdot \sigma \cdot L_r \cdot i_{rq} + \frac{L_h}{L_s} \cdot \frac{d\Psi_{sd}}{dt}$$

$$e_q = +\frac{d\varphi_s}{dt} \cdot \sigma \cdot L_r \cdot i_{rd} + \frac{d\varphi_s}{dt} \cdot \frac{L_h}{L_s} \cdot \Psi_{sd}$$

geschrieben werden. $e_d$ und $e_q$ sind Entkoppelterme um das Gleichungssystem zu entkoppeln und damit die einfache Regelung überhaupt erst zu ermöglichen.

Der Zusammenhang für Winkel und Drehzahlen lautet

$$\gamma = \int \frac{d\gamma}{dt} dt = \int \omega \cdot dt = p \cdot \int \Omega \cdot dt$$

$$\gamma_s = \int \frac{d\gamma_s}{dt} dt = \int \omega_s \cdot dt$$

$$\gamma_r = \int \frac{d\gamma_r}{dt} dt = \int \omega_r \cdot dt$$

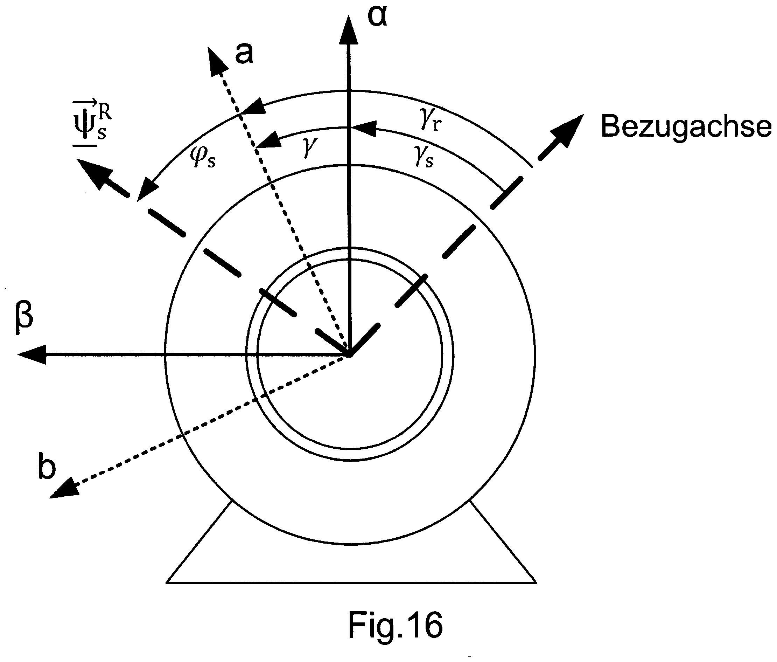

Die Definition des Winkels ist in Figur 16 veranschaulicht.

Für die mechanische Drehzahl gilt

$$\Omega = \frac{\omega_r - \omega_s}{p} \quad ,$$

wobei $\Omega$ die mechanische Drehzahl, p die Polpaarzahl und $\omega_s$ beziehungsweise $\omega_r$ die statorseitige beziehungsweise rotorseitige elektrische Frequenz sind.

Anstatt nun rotorseitig und statorseitig insgesamt vier Stromregler ($i_{rd}$, $i_{sd}$, $i_{rq}$, $i_{sq}$) zu verwenden, wird erfindungsgemäß eine verbesserte Stabilität bei der Regelung der Elektromaschine erreicht, indem rotorseitig zwei Stromregler feldorientiert arbeiten und statorseitig nur ein feldorientierter Magnetisierungsstromregler (Regler für $i_{sd}$) und eine U/f-Steuerung, die die Spannung "$u_{sq}$" erzeugt, wodurch statorseitig ein sensorloses Regelungskonzept aufgebaut ist.

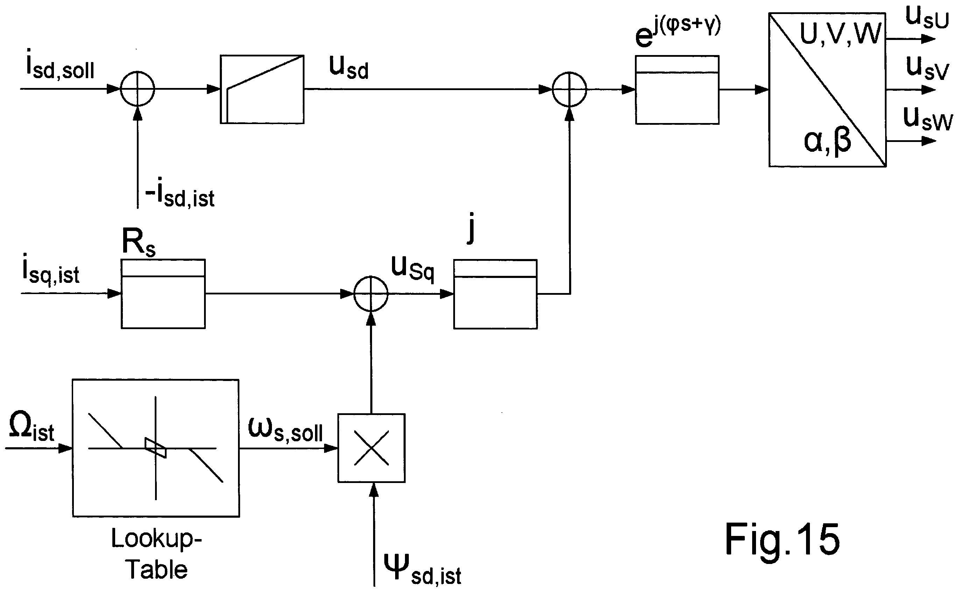

Die U/f-Steuerung basiert dabei auf der Vorgabe von drehzahlabhängigen Frequenzsollwerten $\omega_{s,\,Soll}$. Wie in Figur 15 gezeigt, wird aus der mechanischen Istdrehzahl, welche entweder mittels eines Drehzahlsensors erfasst wird oder mittels einer Modellbildung im Regler geschätzt wird, der Frequenzsollwert $\omega_{s,\,Soll}$

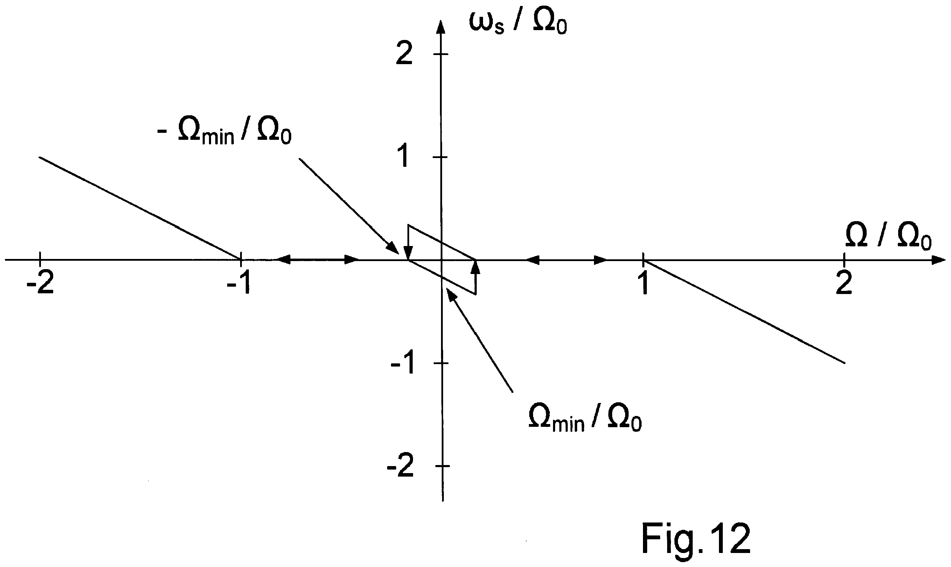

gemäß einer Kennlinie, die in einer Lookup-Table hinterlegt ist, insbesondere mittels zu interpolierender Wertepaare, bestimmt. Diese Kennlinie ist in Figur 12 vergrößert dargestellt, wobei dort der Frequenzsollwert $\omega_{s,\,Soll}$ als Frequenzsollwert $\omega_s$ bezeichnet ist. Dabei ist der Frequenzsollwert $\omega_s$ Null, solange der Betrag der mechanischen Drehzahl $\Omega$ kleiner ist als der Betrag der synchronen Drehzahl $\Omega_0$ und größer als der Betrag eines Minimalwertes $\Omega_{MIN}$. Somit sind in diesem Frequenzbereich die statorseitigen Eisenverluste vermieden oder zumindest reduziert.

Die synchrone Drehzahl $\Omega_0$ bei der erfindungsgemäß zweiseitig einspeisbaren Elektromaschine ist doppelt so groß wie die synchrone Drehzahl bei einer nur einseitig einspeisbaren Elektromaschine.

**Wie in Figur 12 oder 15 gezeigt, wird der Frequenzsollwert $\omega_{s,\,Soll}$ mittels der Kennlinie bestimmt. Wie in Figur 15 gezeigt, wird mit der $\Psi_{sd,\,ist}$ multipliziert, also mit** derjenigen Komponente des Istwertes des Statorflussraumzeigers, welche dieser in Richtung des magnetisierungsbildenden Stromanteils aufweist. Die Komponente $\Psi_{sd,\,ist}$ bewirkt also die Magnetisierung.

Zur Bildung der in Richtung des momentbildenden Stromanteils $i_{sq}$ vorgesehenen Komponente $U_{sq}$ der Statorspannung wird der durch die Multiplikation entstandene Ergebniswert um $R_s * I_{sq,ist}$ vermindert.

Zur Bildung der in Richtung des magnetisierungsbildenden Stromanteils $i_{sd}$ vorgesehenen Komponente $U_{sd}$ wird die Abweichung zwischen dem Sollwert $i_{sd,soll}$ und dem Istwert $i_{sd,ist}$ einem Integrierglied zugeführt. Somit ist hier ein Regler mit integrierendem Anteil vorgesehen, wobei als Regler ein linearer Regler, wie PI-Regler, eingesetzt ist.

Aus den beiden Spannungskomponenten wird ein Statorspannungsraumzeiger gebildet, der in der Richtung des um $\gamma$ erhöhten Feldorientierungswinkels vorgesehen ist. Ein solcher Raumzeiger ($U_{sU}$, $U_{sV}$, $U_{sW}$) wird dann der statorseitigen Drehfeldwicklung, also der Statorwicklung, zugeführt.

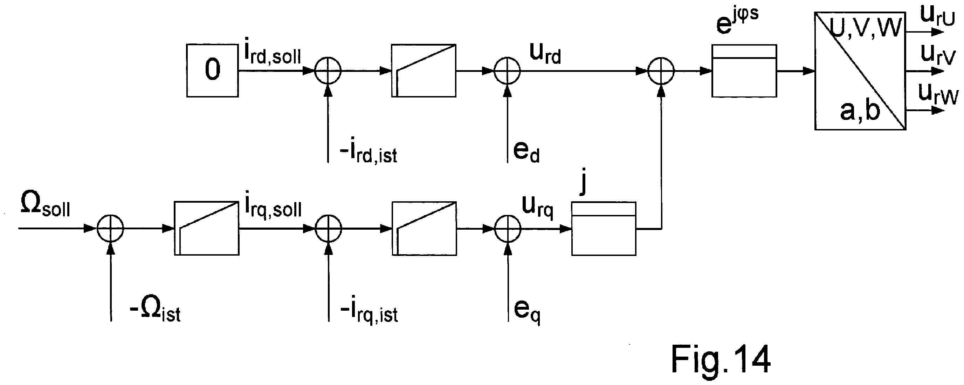

Wie in Figur 14 gezeigt, wird die Rotorfrequenz über eine direkte U/f-Steuerung eingeprägt, insbesondere über die Spannungskomponente $u_{rq}$.

Die Statorfrequenz wird über die Spannungskomponente $u_{sq}$ eingeprägt, wie in Figur 15 gezeigt. Die Rotorfrequenz ergibt sich dadurch, dass der Drehzahlregler die mechanische Drehzahl konstant hält und damit die notwendige Rotorfrequenz passend zur Drehzahl einstellt.

Hierzu wird - wie in Figur 14 gezeigt - die Differenz aus dem Sollwert für die mechanische Drehzahl $\Omega$ und dem erfassten oder geschätzten Istwert $\Omega_{ist}$ für die mechanische Drehzahl einem Reglerglied zugeführt, insbesondere einem linearen Reglerglied, wie P-Reglerglied, PI-Reglerglied oder PID-Reglerglied. Stellgröße dieses Reglerglieds ist der Sollwert $i_{rq,Soll}$ für den rotorseitigen momentenbildenden Stromanteil. Die Abweichung zum entsprechenden Istwert $i_{rq,ist}$ wird einem Integrierglied zugeführt, dessen Ausgangssignal auf den Entkoppelterm $e_q$ aufsummiert wird.

Der Sollwert $i_{rd,Soll}$ für den magnetisierungsbildenden Stromanteil wird auf Null gesetzt und die Abweichung zum entsprechenden Istwert einem Integrierglied zugeführt, dessen Ausgangssignal auf den Entkoppelterm $e_d$ aufsummiert wird. Somit ist auch hier ein Regler mit integrierendem Anteil vorgesehen, wobei als Regler ein linearer Regler, wie PI-Regler, eingesetzt ist.

Aus den beiden so gebildeten Spannungskomponenten ($U_{rd}$, $U_{rq}$) wird ein in Richtung des Feldorientierungswinkels ausgerichteter Spannungsraumzeiger erzeugt und dieser Spannungsraumzeiger ($U_{rU}$, $U_{rV}$, $U_{rW}$) wird dann der rotorseitigen Drehfeldwicklung, also der Rotorwicklung, zugeführt.

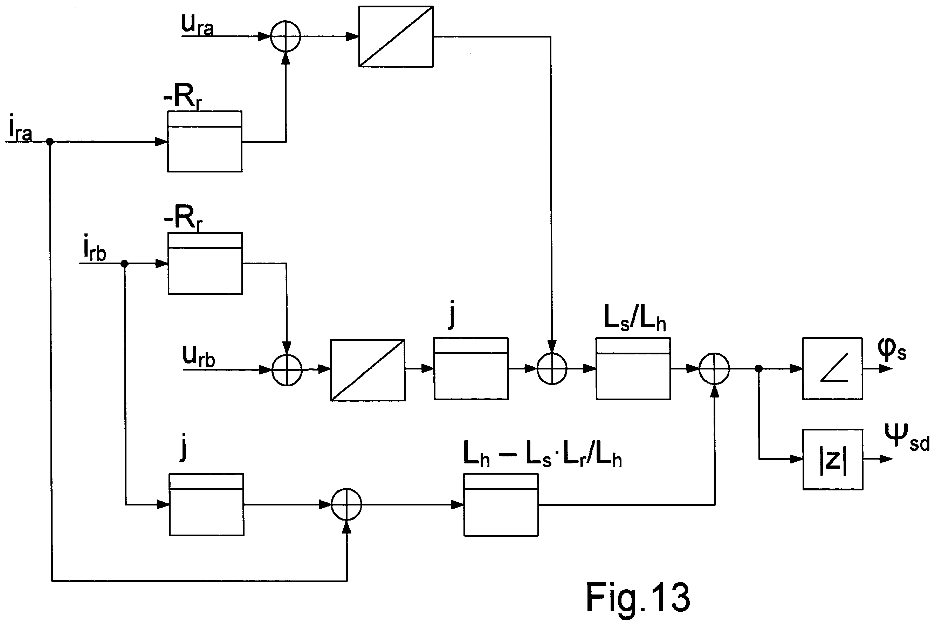

Wie in Figur 13 gezeigt, wird aus dem rotorseitig erfassten Stromraumzeiger ($i_{ra}$, $i_{rb}$) und der rotorseitig erfassten Spannung ($U_{ra}$, $U_{rb}$) gemäß dem Maschinenmodell Richtung und Betrag des Statorflusses bestimmt, also der Feldorientierungswinkel $\varphi_s$ und der die Magnetisierung bildenden Anteil des magnetischen Flussraumzeigers.

Hierzu werden die Stromkomponente $i_{ra}$ und $i_{rb}$ des erfassten Stromraumzeigers dem Ohmschen Widerstand der Rotorwicklung $R_R$ multipliziert und die Differenz zur jeweiligen Stromkomponente $U_{ra}$ und $U_{rb}$ gebildet. Die so gebildeten Produkte werden einem jeweiligen Integrierglied zugeführt und die beiden Ausgangssignale der Integrierglieder als komplexe Größe, insbesondere also als zweidimensionaler Raumzeiger, dargestellt. Die komplexe Größe wird mit $L_S/L_h$ multipliziert und zum Ergebniswert der ebenfalls komplex dargestellte, mit ($L_h - L_S*L_r/L_h$) multiplizierte Stromraumzeiger ($i_{ra} + j * i_{rb}$) addiert. Auf diese Weise ist somit der Statorfluss bestimmt, also der Feldorientierungswinkel $\varphi_s$ und der die Magnetisierung bildenden Anteil des magnetischen Flussraumzeigers.

Kleine mechanische Drehzahlen sind bei der zweiseitig gespeisten Elektromaschine nicht zwingend mit kleinen elektrischen Frequenzen verbunden im Unterschied zu einseitig eingespeisten Maschinen.

Besondere Vorteil der Erfindung liegt darin, dass der für die Regelung notwendige Feldorientierungswinkel, also die Lage des Feldes, mit einem recht einfachen mathematischen Modell bestimmbar ist. Diese Bestimmung ist bei der Erfindung für auch für kleine mechanische Drehzahlen und sogar bis zum Stillstand ausführbar, da die elektrische Frequenz, insbesondere Rotorfrequenz, nie unter einen Minimalwert sinkt. Beispielhaft beträgt dieser Minimalwert zwischen 5 Hz und 15 Hz, insbesondere zwischen 10 Hz und 12 Hz. Besonders vorteilhaft ist, dass das sogenannte, in den Figuren dargestellte Spannungsmodell für die Berechnung des Feldorientierungswinkels verwendbar ist.

Wie in den Figuren 13 bis 15 gezeigt, weist die erfindungsgemäße Regelungsstruktur drei Stromregler auf und eine zusätzliche U/f-Steuerung.

Zwei dieser drei Stromregler erfüllen dabei diejenigen Forderungen, die auch bei einer einseitig gespeisten Maschine notwendig wären. Diese Forderungen umfassen zum Einen einen konstanten Magnetisierungszustand und zum Anderen die Einstellbarkeit des Drehmoments bei konstanter Magnetisierung. Der Magnetisierungszustand wird hier vom Stromanteil $i_{sd}$ bestimmt, wie in Figur 15 gezeigt. Das Drehmoment wird über den Stromanteil $i_{rq}$ bestimmt, wie in Figur 14 gezeigt.

Wir in Figur 14 gezeigt, bewirkt der dritte Stromregler für den Stromanteil $i_{rd}$ (siehe Abb. 5 oben) für eine Einstellung des rotorseitigen Magnetisierungsstroms. Da dieser nicht benötigt wird, wird die Phasenverschiebung am Rotor auf 0° geregelt, wodurch eine Minimierung des dort fließenden Stroms vorgenommen wird. Somit wird Verlustleistung verringert und auch bei Übertragung der auf dem Rotor benötigten elektrischen Leistung über Schleifringe oder berührungslose induktive Übertrager ist somit möglichst viel Leistung bereitstellbar.

Die erfindungsgemäß verwendete Kennlinie ermöglicht, dass aus der gemessenen oder geschätzten mechanischen Drehzahl die einzustellende Spannung $u_{sq}$ ermittelt wird und der Maschine vorgebbar ist, wie in Figur 15 gezeigt.

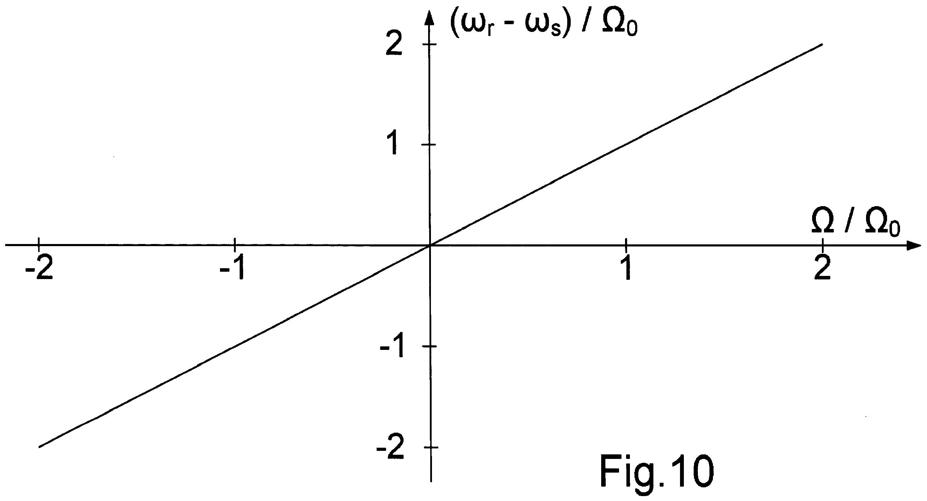

Wie in den Figuren 10, 11 und 12 gezeigt, ist auf der Abszisse jeweils die mechanische Drehzahl bezogen auf die synchrone Drehzahl $\Omega_0$ einer einseitig eingespeisten Maschine aufgetragen. Der Grundstellbereich erstreckt sich bei zweiseitig eingespeisten Maschinen bis zur doppelten synchronen Drehzahl einer einseitig gespeisten Maschine.

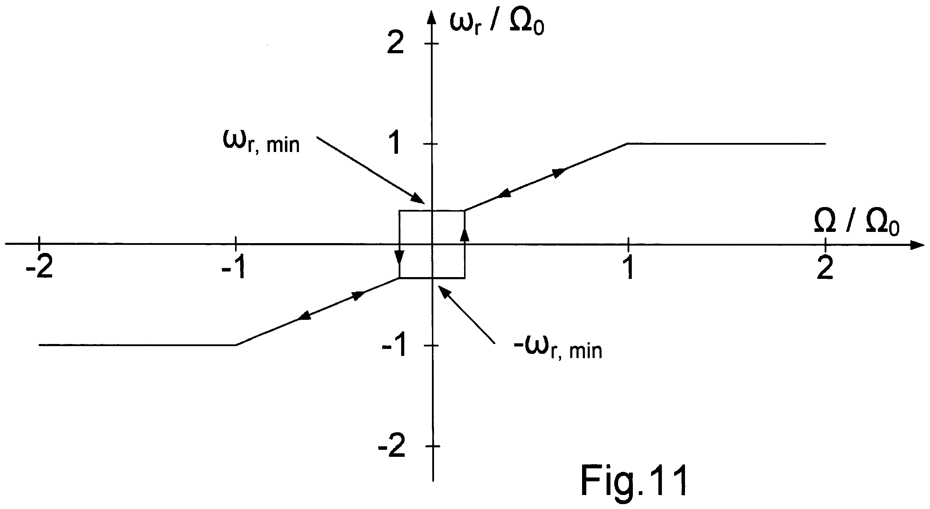

In Figur 10 ist die mechanische Drehzahl als bezogene Differenz der Frequenzen über der, auf die synchrone Drehzahl bezogenen Drehzahl dargestellt. Somit ist hierbei eine Winkelhalbierende vorgesehen. Diese Abbildung dient der Veranschaulichung der in den Figuren 11 und 12 folgenden Graphen. Denn die Differenz der beiden Graphen ergibt den Verlauf in Figur 10.

In Figur 11 ist die sich aus der Statorfrequenzsteuerung ergebende Rotorfrequenz nach dem hier vorgeschlagenen Verfahren aufgetragen. In Figur 12 ist dementsprechend die drehzahlabhängige Statorstellfrequenz aufgetragen.

Die hier vorgestellten Kennlinien sehen eine Absenkung der Statorspeisefrequenz auf 0 Hz über einen weiten Drehzahlbereich, nämlich den Bereich zwischen $\Omega_{min} / \Omega_0$ und 1, vor, wie in Figur 12 dargestellt ist. In diesem Bereich entstehen im Stator keinerlei Eisenverluste und die Maschine wird ähnlich einer gleichstromerregten Synchronmaschine betrieben.

Diese Absenkung der Frequenz auf 0 Hz beginnt bei geringen Drehzahlbeträgen, die eine definierte Rotorminimalfrequenz $\omega_{r, min}$ ermöglichen. Mittels des Einhaltens der Minimalfrequenz $\omega_{r, min}$ ist geberlose Berechnung des für die Regelung notwendigen Feldorientierungswinkels mit einem sog. Rotorspannungsmodell ermöglicht, wie in Figur 13 gezeigt. Denn das Spannungsmodell weist die zwei, nicht rückgekoppelten Integrierglieder auf, die bei sehr kleinen Eingangsfrequenzen der Rotorgrößen falsche Ergebnisse liefern würden. Dies wird aber durch die Festlegung der Rotorminimalfrequenz $\omega_{r,\,min}$ verhindert. **Diese offenen Integrationen führen bei kleinen Frequenzen insbesondere bei zeitdiskreten Reglerstrukturen zum Divergieren des Integrationsergebnisses, wenn beispielsweise eingangsseitig ein Rundungsfehler auftritt oder ein sonstiger Offset.**

**Bei diesen kleinen Frequenzen ist somit die EMK, also elektromotorische Kraft, derart gering, dass eine darauf basierte Bestimmung der Rotorwinkellage nicht mehr brauchbar ist und somit hierzu eigentlich ein Winkelsensor verwendet werden muss oder ein anderes mathematisches Berechnungs- oder Schätzverfahren, welches nicht auf die Bestimmung der EMK angewiesen ist.**

Die im Drehzahlbereich um Null in den Figuren 11 und 12 dargestellte Hysterese ist notwendig, um ständiges Umschalten zwischen positiver und negativer Speisefrequenz und somit Schwingneigung am Rotor zu unterbinden, wobei mit positiver und negativer Frequenz in diesem Zusammenhang die Drehrichtung des Drehfeldes gemeint ist.

Das Potential des erfindungsgemäßen Regelungsverfahrens liegt zum einen in der Möglichkeit, zweiseitig eingespeiste Drehfeldmaschinen bis hin zu kleinsten Drehzahlen und auch im Stillstand geberlos regelbar zu machen. Zum andern ist eine Minimierung des Rotorstroms erreichbar. Außerdem ist eine Verbesserung der Bauleistung von Übertragungssystemen und der Effizienz des Antriebs erreichbar. Weiterhin wirkt das erfindungsgemäße Verfahren, insbesondere die Absenkung der Statorfrequenz auf 0 Hz, bei Maschinen mit eisenlosem Rotor besonders vorteilhaft. Der Wirkungsgrad wird dadurch deutlich verbessert. Denn in diesem Bereich treten in der gesamten Maschine keinerlei Eisenverluste auf, weil der mit Frequenz beaufschlagte Rotor eisenlos ist und der Stator nicht mit Frequenz beaufschlagt wird.

Statt auf einer rotorischen Elektromaschine ist bei einem anderen erfindungsgemäßen Ausführungsbeispiel die Erfindung auch bei einem Linearmotor in analoger Weise ausführbar.

Bei weiteren erfindungsgemäßen Ausführungsbeispielen sind in Figur 7 und 8 auch Wellen- oder Schleifenwicklungen ausgeführt.

Bezugszeichenliste

1 Leiterplatte, insbesondere Multilayer-Leiterplatte
2 Mittenebene
3 Statorkern
4 Welle
5 Lager
6 Lager
21 Umlenkbereich, insbesondere radial äußerer Umlenkbereich, Wickelkopfbereich
22 Aktivbereich
23 Wicklungsleitung
24 Verbindungsbereich zur Welle 4
25 mit Bauelementen bestückter Bereich der Leiterplatte
26 Umlenkbereich, insbesondere radial innerer Umlenkbereich, Wickelkopfbereich 51 Schleifübertragungsmittel
52 Leistungsstufe, insbesondere Verstärker, mit Leistungshalbleiterschaltern
53 Steuerelektronik mit pulsweitenmodulierten Ansteuersignalen für die Leistungshalbleiterschalter
61 Sekundärwicklung
62 Primärwicklung
63 Wechselrichter
64 Steuerelektronik
71 Einzelzahnwicklung
91 Wechselspannungsquelle, Versorgungsnetz
92 Gleichrichter
93 Zwischenkreiskondensator
94 statorseitiger Wechselrichter
95 rotorseitiger Wechselrichter
96 Elektromaschine, zweiseitig speisbare
$i_{sd}$ Feldbildende Stromkomponente, die in der Statorwicklung fließt
$i_{rd}$ Feldbildende Stromkomponente, die in der Rotorwicklung fließt
$i_{sq}$ Drehmomentbildende Stromkomponenten, die in der Statorwicklung fließt
$i_{rq}$ Drehmomentbildende Stromkomponente, die in der Rotorwicklung fließt

$u_{sd}$ Komponente der Statorspannung, mit der die feldbildende Stromkomponente am Stator eingestellt wird

$u_{rd}$ Komponente der Rotorspannung mit der (nach Entkopplung durch $e_d$) die feldbildende Stromkomponente am Rotor eingestellt wird (im Konzept auf Null ausgeregelt wird)

$u_{rq}$ Komponente der Rotorspannung mit der (nach Entkopplung durch $e_q$) die drehmomentbildende Komponente des Rotorstroms eingestellt wird.

$u_{sq}$ Komponente der Statorspannung mit deren Hilfe die Frequenz über die Lookup-Table eingestellt wird

$Q_{min}$ erste Drehzahl

$\Omega_0$ zweite Drehzahl

$\omega_{r, min}$ Rotorminimalfrequenz

**Patentansprüche**

1. Verfahren zum Betreiben einer Elektromaschine (96), welche einen gegenüber einem Stator relativ bewegbaren Läufer, insbesondere Rotor, aufweist,

wobei die mechanische, zum Stator relative Geschwindigkeit des Läufers, insbesondere Drehgeschwindigkeit des Rotors, erfasst oder geschätzt wird, insbesondere von einer Steuerelektronik (53, 64),

wobei am Läufer eine Wicklung, **also** Rotorwicklung, angeordnet ist, die als Drehfeldwicklung ausgeführt ist,

wobei am Stator eine Statorwicklung angeordnet ist, die ebenfalls als Drehfeldwicklung ausgeführt ist, wobei der Rotor einen Aktivbereich (22) aufweist, insbesondere zur Drehmomenterzeugung bei Wechselwirkung des Aktivbereichs (22) mit dem vom Stator erzeugten Magnetfeld,

wobei der Aktivbereich (22) elektrisch bestrombare Leiterbahnen einer Multilayer-Leiterplatte (1), insbesondere also einer mehrlagigen Leiterplatte (1), aufweist, **wobei die Rotorwicklung eine niedrigere Induktivität als die Statorwicklung aufweist, insbesondere wobei die Statorwicklung einen eisenhaltigen Spulenkern und/oder ein Blechpaket aufweist,**

wobei jede Drehfeldwicklung von einem jeweiligen Wechselrichter (63) gespeist wird, insbesondere also die läufer- und/oder rotorseitige Drehfeldwicklung von einem läufer- und/oder rotorseitigen Wechselrichter (95) und die statorseitige Drehfeldwicklung von einem statorseitigen Wechselrichter (94), **wobei** aus der mechanischen Drehzahl $\Omega$ gemäß einer Kennlinie eine elektrische Frequenz $\omega_{S,Soll}$ der vom statorseitigen Wechselrichter (63) an die Statorwicklung gespeisten Spannung, insbesondere die elektrische Frequenz des statorseitig erzeugten Drehfeldes, insbesondere also die Statorspeisefrequenz, bestimmt wird,

insbesondere wobei die Kennlinie eine hysteresebehaftete Abhängigkeit der elektrischen Frequenz $\omega_{S,Soll}$ von der mechanischen Geschwindigkeit darstellt,

wobei die Kennlinie derartig ausgeführt ist, dass in einem Drehzahlbereich zumindest von $\Omega_{min}$ bis $\Omega_0$ der Betrag der Statorspeisefrequenz $\omega_S$ auf weniger als den Betrag einer Minimalfrequenz $\omega_{S, min}$ abgesenkt wird **und/oder auf den Betrag einer Minimalfrequenz von Null Hertz abgesenkt ist, insbesondere wobei die Minimalfrequenz einen konstanten Betrag aufweist im Drehzahlbereich von $\Omega_{min}$ bis $\Omega_0$,**

und wobei die Kennlinie derartig ausgeführt ist, dass **der Betrag der Speisefrequenz $\omega_S$ der Statorwicklung größer als der Betrag der Minimalfrequenz gewählt wird, wenn die mechanische Drehzahl $\Omega$ die** zweite Drehzahl $\Omega_0$ **überschreitet,**

wobei $\Omega_{min}$ eine erste Drehzahl ist und wobei $\Omega_0$ eine zweite Drehzahl ist, wobei der Betrag der zweiten Drehzahl $\Omega_0$ größer ist als der Betrag der ersten Drehzahl,

insbesondere wobei der von der Hysterese überdeckte Drehzahlbereich betragsmäßig **begrenzt ist durch den** Betrag der ersten Drehzahl $\Omega_{min}$,

**wobei der Betrag der elektrischen rotorseitigen Speisefrequenz $\omega_r$ den Betrag eines nicht verschwindenden Minimalwerts $\omega_{r, min}$ nicht unterschreitet, insbesondere zur Gewährleistung einer EMK-basierten Rotorlageerfassung,**

**dadurch gekennzeichnet, dass**

**dem Aktivbereich (22), der Rotorwicklung und/oder der auf der Leiterplatte (1) bestückte elektronische Bauelemente aufweisenden elektronischen Schaltung elektrische Leistung über eine induktive Kopplung zuführbar ist,**

**wobei der Rotor mit einer Sekundärwicklung (61) verbunden ist, die induktiv an eine mit dem Stator drehfest verbundene Primärwicklung (62) gekoppelt ist,**

**wobei in die Primärwicklung (62) von einer elektrischen Einspeisung ein mittelfrequenter Strom**, vorzugsweise mit einer Frequenz zwischen 100 und 200 kHz, **eingeprägt wird, die einen als Stromquelle fungierenden Gyrator aufweist.**

2. Verfahren zum Betreiben einer Elektromaschine (96), welche einen gegenüber einem Stator relativ bewegbaren Läufer, insbesondere Rotor, aufweist,
wobei die mechanische, zum Stator relative Geschwindigkeit des Läufers, insbesondere Drehgeschwindigkeit des Rotors, erfasst oder geschätzt wird, insbesondere von einer Steuerelektronik (53, 64),
wobei am Läufer eine Wicklung, also Rotorwicklung, angeordnet ist, die als Drehfeldwicklung ausgeführt ist,
wobei am Stator eine Statorwicklung angeordnet ist, die ebenfalls als Drehfeldwicklung ausgeführt ist, wobei der Rotor einen Aktivbereich (22) aufweist, insbesondere zur Drehmomenterzeugung bei Wechselwirkung des Aktivbereichs (22) mit dem vom Stator erzeugten Magnetfeld,
wobei der Aktivbereich (22) elektrisch bestrombare Leiterbahnen einer Multilayer-Leiterplatte (1), insbesondere also einer mehrlagigen Leiterplatte (1), aufweist, **wobei als erste Wicklung die** Rotorwicklung **bezeichnet wird, wenn diese eine höhere Induktivität als die Statorwicklung aufweist und**

**wobei als erste Wicklung die Statorwicklung bezeichnet wird, wenn diese eine höhere Induktivität als die** Rotorwicklung **aufweist,** wobei jede Drehfeldwicklung von einem jeweiligen Wechselrichter (63) gespeist wird, insbesondere also die läufer- und/oder rotorseitige Drehfeldwicklung von einem läufer- und/oder rotorseitigen Wechselrichter (95) und die statorseitige Drehfeldwicklung von einem statorseitigen Wechselrichter (94), **wobei** aus der mechanischen Drehzahl $\Omega$ gemäß einer Kennlinie eine elektrische Frequenz $\omega_{S,Soll}$ der vom statorseitigen Wechselrichter (63) an die Statorwicklung gespeisten Spannung, insbesondere die elektrische Frequenz des statorseitig erzeugten Drehfeldes, insbesondere also die Statorspeisefrequenz, bestimmt wird,
insbesondere wobei die Kennlinie eine hysteresebehaftete Abhängigkeit der elektrischen Frequenz $\omega_{S,Soll}$ von der mechanischen Geschwindigkeit darstellt, wobei die Kennlinie derart ausgeführt ist, dass die Statorspeisefrequenz auf weniger als eine Minimalfrequenz abgesenkt ist in einem Drehzahlbereich zumindest von $Q_{min}$ bis $\Omega_0$,
**wobei die Speisefrequenz der ersten Wicklung auf eine Minimalfrequenz, insbesondere zeitlich konstante Minimalfrequenz, abgesenkt wird,**
**wobei die elektrische rotorseitige Speisefrequenz $\omega_r$ und die elektrische statorseitige Speisefrequenz $\omega_S$ derart gewählt werden, dass die Summe**
**der beiden Speisefrequenzen der gewünschten mechanischen Drehzahl $\Omega_{Soll}$ entspricht, insbesondere also**

$$\Omega = \frac{\omega_r - \omega_s}{p} \text{ ist.}$$

**wobei $\Omega$ die mechanische Drehzahl, p die Polpaarzahl und $\omega_s$ beziehungsweise $\omega_r$ die statorseitige beziehungsweise rotorseitige elektrische Frequenz sind, ist, und wobei die Verluste minimiert werden,**
**insbesondere also der verfügbare Freiheitsgrad der anteiligen Zusammensetzung der aufsummierten Speisefrequenzen derart genutzt wird,** dass die Verluste **minimiert werden,**
wobei $\Omega_{min}$ eine erste Drehzahl ist und wobei $\Omega_0$ eine zweite Drehzahl ist, wobei der Betrag der zweiten Drehzahl $\Omega_0$ größer ist als der Betrag der ersten Drehzahl,
und wobei die Kennlinie derart ausgeführt ist, dass **der Betrag der Speisefrequenz $\omega_S$ der ersten Wicklung größer als der Betrag der Minimalfrequenz gewählt wird, wenn die mechanische Drehzahl $\Omega$ die** zweite Drehzahl $\Omega_0$ **überschreitet,**
insbesondere wobei der von der Hysterese überdeckte Drehzahlbereich betragsmäßig kleiner ist als der Betrag der ersten Drehzahl $\Omega_{min}$,
**wobei die elektrische rotorseitige Speisefrequenz $\omega_r$ einen Minimalwert $\omega_{r, min}$ nicht unterschreitet, insbesondere zur Gewährleistung einer EMK-basierten Rotorlageerfassung,**
**dadurch gekennzeichnet, dass**
**dem Aktivbereich (22), der Rotorwicklung und/oder der auf der Leiterplatte (1) bestückte elektronische Bauelemente aufweisenden elektronischen Schaltung elektrische Leistung über eine induktive Kopplung zuführbar ist,**
**wobei der Rotor mit einer Sekundärwicklung (61) verbunden ist, die induktiv an eine mit dem Stator drehfest verbundene Primärwicklung (62) gekoppelt ist,**
**wobei in die Primärwicklung (62) von einer elektrischen Einspeisung ein mittelfrequenter Strom**, vorzugsweise mit einer Frequenz zwischen 100 und 200 kHz, **eingeprägt wird, die einen als Stromquelle fungierenden Gyrator aufweist.**

**3.** Verfahren nach Anspruch 1 oder 2,
**dadurch gekennzeichnet, dass**
**die Ablösung von der Minimalfrequenz erfolgt, wenn der Ankerstellbereich, insbesondere Grundstellbereich, der Rotorwicklung verlassen wird, insbesondere also die mechanische Drehzahl $\Omega$ die** zweite Drehzahl $\Omega_0$ **überschreitet.**

**4.** Verfahren nach mindestens einem der vorangegangenen Ansprüche,
**dadurch gekennzeichnet, dass**
**die erforderliche Feldfrequenz möglichst in der Rotorwicklung realisiert wird.**

**5.** Verfahren nach mindestens einem der vorangegangenen Ansprüche,
**dadurch gekennzeichnet, dass**
jeweils Halbleiterschaltern des jeweiligen Wechselrichters (63) von einer Steuerelektronik (53, 64) Ansteuersignale zugeführt werden, wobei die jeweilige Steuerelektronik (53, 64) eine Regelvorrichtung aufweist,

**6.** Verfahren nach mindestens einem der vorangegangenen Ansprüche,
**dadurch gekennzeichnet, dass**
die statorseitige Regelvorrichtung eine U/f-Steuerung aufweist
und dass
die läuferseitige oder rotorseitige Regelvorrichtung eine feldorientierte Regelung aufweist,

**7.** Verfahren nach mindestens einem der vorangegangenen Ansprüche,
**dadurch gekennzeichnet, dass**
die Minimalfrequenz 0 Hz ist
und/oder dass
die erste Drehzahl $\Omega_{min}$ derart gewählt ist, dass offene und/oder nicht rückgekoppelte Integrationen der feldorientierten, insbesondere zeitdiskret ausgeführten, insbesondere numerisch arbeitenden, Regelung nicht divergieren, und/oder dass
die erste Drehzahl $\Omega_{min}$ derart gewählt ist, dass die gemäß Kennlinie und Regelung sich einstellende elektrische rotorseitige Speisefrequenz $\omega_{r, min}$ einen Minimalwert nicht unterschreitet, insbesondere wobei der Minimalwert zwischen 1 Hz und 20 Hz beträgt, insbesondere zwischen 10 Hz und 15 Hz,
und/oder dass
die zweite Drehzahl $\Omega_0$ die synchrone Drehzahl einer einseitig gespeisten Elektromaschine (96) ist oder dass die zweite Drehzahl $\Omega_0$ der Hälfte der synchronen Drehzahl der zweiseitig gespeisten Elektromaschine (96) gleicht.

**8.** Verfahren nach mindestens einem der vorangegangenen Ansprüche,
**dadurch gekennzeichnet, dass**
als rotorseitig vorgegebener Sollwert für den magnetisierungsbildenden Stromanteil Null vorgegeben wird, insbesondere zur Reduktion von Verlustleistung.

**9.** Verfahren nach mindestens einem der vorangegangenen Ansprüche,
**dadurch gekennzeichnet, dass**
die U/f-Steuerung die Abweichung der mechanischen erfassten oder geschätzten Drehzahl zum vorgegebenen Drehzahl-Sollwert einem Reglerglied zugeführt wird, das als Ausgangssignal den Sollwert des rotorseitigen momentbildenden Stromanteils erzeugt,
wobei die Abweichung zwischen diesem Sollwert und dem Istwert des momentbildenden rotorseitigen Stromanteils einem Reglerglied, insbesondere Integrierglied, zugeführt wird, aus dessen Ausgangssignal ein Spannungswert, insbesondere die Komponente des Spannungsraumzeigers in Richtung des momentbildenden Stromanteils, bestimmt wird, insbesondere unter Aufsummation des $e_q$-Signals.

**10.** Verfahren nach mindestens einem der vorangegangenen Ansprüche,
**dadurch gekennzeichnet, dass**
die feldorientierte Regelung Integrierglieder aufweist, aus deren Ausgangssignalen der Feldorientierungswinkel bestimmt wird,
insbesondere unter Aufsummation eines Anteils des Stromraumzeigers auf den durch die Ausgangssignale dargestellten Raumzeiger.

**11.** Elektromotor (96) zur Durchführung eines Verfahrens nach mindestens einem der vorangegangenen Ansprüche, aufweisend einen Stator mit Statorkernen (3) und einen relativ zum Stator drehbar angeordneten Rotor, wobei der Rotor einen Aktivbereich (22) aufweist, insbesondere zur Drehmomenterzeugung bei Wechselwirkung des Aktivbereichs (22) mit dem vom Stator erzeugten Magnetfeld,
**wobei** der Aktivbereich (22) elektrisch bestrombare Leiterbahnen einer Multilayer-Leiterplatte (1), insbesondere also einer mehrlagigen Leiterplatte (1), aufweist,
**wobei auf der Multilayer-Leiterplatte (1) ein Wechselrichter (63) angeordnet ist, welcher den Aktivbereich**

(22) speist,

wobei dem Wechselrichter (63) elektrische Leistung über eine induktive Kopplung von einer statorseitigen Primärwicklung (62) zuführbar ist,

wobei die Leiterbahnen der Multilayer-Leiterplatte (1) eine Drehfeldwicklung bilden, wobei die Drehfeldwicklung als Schleifenwicklung oder Wellenwicklung ausgeführt ist, insbesondere also nicht als konzentrierte Wicklung,

dadurch gekennzeichnet, dass

dem Aktivbereich (22), der Rotorwicklung und/oder einer auf der Leiterplatte (1) bestückten elektronische Bauelemente aufweisenden elektronischen Schaltung elektrische Leistung über eine induktive Kopplung zuführbar ist,

wobei der Rotor mit einer Sekundärwicklung (61) verbunden ist, die induktiv an eine mit dem Stator verbundene, insbesondere drehfest verbundene, Primärwicklung (62) gekoppelt ist

wobei in die Primärwicklung (62) von einer elektrischen Einspeisung ein mittelfrequenter Strom vorzugsweise mit einer Frequenz zwischen 100 und 200 kHz, eingeprägt wird, die einen als Stromquelle fungierenden Gyrator aufweist.

12. Elektromotor (96) nach Anspruch 11, dadurch gekennzeichnet, dass

die Leiterplatte (1) drehfest mit dem Rotor verbunden ist,

insbesondere wobei die Leiterplatte (1) drehfest mit einem Wellenabschnitt des Rotors verbunden ist,

insbesondere wobei der Rotor über Lager (5, 6) gelagert ist, die in einem Teil, insbesondere Gehäuseteil, aufgenommen sind, welches fest mit dem Stator, insbesondere den Statorkernen (3), verbunden sind,

und/oder dass

die Leiterbahnen der Multilayer-Leiterplatte (1) eine Drehfeldwicklung bilden,

und/oder dass

der Stator Dauermagnete aufweist, insbesondere deren Magnetisierungsrichtung jeweils parallel zur Drehachse des Rotors ausgerichtet sind, insbesondere axial ausgerichtet sind, und/oder dass

der Stator eine Statorwicklung aufweist zur Erzeugung eines Drehfeldes, insbesondere wobei die Statorwicklung eine Drehfeldwicklung ist,

und/oder dass

die im Aktivbereich (22) angeordneten Leiterbahnen radial verlaufen und/oder sich radial erstrecken.

13. Elektromotor (96) nach Anspruch 11 oder 12, dadurch gekennzeichnet, dass

sich an den Aktivbereich (22) radial innen und radial außen jeweils ein Umlenkbereich (21, 26) anschließt,

insbesondere wobei die Leiterbahnen einer jeweiligen Lage in einem Umlenkbereich (21, 26) jeweils enden in einer axial gerichteten Durchkontaktierung, insbesondere axial gerichteten durchkontaktierten Bohrung der Leiterplatte (1), insbesondere zur elektrischen Verbindung von Leiterbahnen verschiedener Lagen.

14. Elektromotor (96) nach einem der vorangegangenen Ansprüche 11 bis 13, dadurch gekennzeichnet, dass

der Stator einen oder zwei sich axial gegenüber stehende Statorkerne (3) aufweist, insbesondere wobei der Aktivbereich (22) axial zwischen den beiden Statorkernen (3) angeordnet ist,

insbesondere wobei die beiden Statorkerne (3) gegeneinander einen nicht verschwindenden Versatzwinkel in Umfangsrichtung zueinander aufweisen,

und/oder dass

am Statorkern (3) zahnartige Vorsprünge ausgebildet sind, die in Umfangsrichtung voneinander regelmäßig beabstandet sind, insbesondere und auf gleichem Radialabstand angeordnet sind,

wobei die Statorwicklung Einzelwicklungen (71) aufweist, insbesondere aus Einzelwicklungen (71) gebildet ist, wobei jede Einzelwicklung (71) auf einem jeweiligen zahnartigen Vorsprung aufgesteckt angeordnet ist, insbesondere wobei das aus den Einzelwicklungen (71) erzeugte Magnetfeld im Wesentlichen axial gerichtet ist,

insbesondere wobei das aus den Einzelwicklungen (71) erzeugte Hauptfeld des Magnetfelds axial gerichtet ist

und/oder dass

der jeweilige Statorkern (3) topfartig ausgeformt ist, wobei die zahnartigen Vorsprünge den Topfrand bilden, insbesondere wobei der Statorkern (3) jeweils aus SMC Material gefertigt ist,

und/oder dass

die Leiterplatte (1) einen kreisförmigen radialen Außenrand aufweist,

und/oder dass

die Leiterbahnen aus Kupfer oder einem kupferhaltigen Werkstoff sind und/oder die Leiterbahnen der inneren Lagen der Leiterplatte (1) in einem elektrisch isolierenden Trägermaterial eingebettet sind, insbesondere wobei das Trägermaterial zumindest Epoxidharz aufweist,

**und/oder dass**

die Leiterplatte (1) mit elektronischen Bauteilen einer elektronischen Schaltung bestückt ist, insbesondere auf kleinerem Radialabstand als der Aktivbereich (22) und/oder als die Umlenkbereiche (21, 26) angeordnet sind.

**15.** Elektromotor (96) nach einem der vorangegangenen Ansprüche 11 bis 14,
**dadurch gekennzeichnet, dass**
die Sekundärwicklung (61) axial beabstandet ist von der Leiterplatte (1),
insbesondere wobei Sekundärwicklung (61) und Primärwicklung (62) als Ringwicklungen ausgeführt sind, insbesondere deren Wickelachse parallel zur Rotorachse ausgerichtet ist,
insbesondere wobei die Einspeisung einen Gyrator aufweist, insbesondere wobei der Gyrator als Vierpol ausgeführt ist und zumindest eine derartige Kapazität und mindestens eine derartige Induktivität aufweist, dass die zugehörige Resonanzfrequenz der eingeprägten Mittelfrequenz im Wesentlichen gleicht, wobei bei eingangsseitig angeordneter Wechselspannungsquelle, deren Wechselspannung die Resonanzfrequenz aufweist, ausgangsseitig der Gyrator eine Stromquelle darstellt,
insbesondere wobei der Sekundärwicklung (61) eine Kapazität in Reihe oder parallel zugeschaltet ist, so dass die zugehörige Resonanzfrequenz im Wesentlichen der Mittelfrequenz entspricht,
**und/oder dass**
der Aktivbereich (22), die Rotorwicklung und/oder die elektronische Schaltung elektrische Leistung über eine Schleifversorgung, insbesondere eine mehrphasige Schleifversorgung, zuführbar ist.

**Claims**

**1.** Method for operating an electric machine (96) which has a rotating part, in particular a rotor, that is movable relative to a stator,
wherein the mechanical speed of the rotating part relative to the stator, in particular the rotational speed of the rotor, is detected or estimated, in particular by control electronics (53, 64),
wherein a winding, that is to say a rotor winding, is arranged on the rotating part, said rotor winding being designed as a rotating field winding,
wherein a stator winding is arranged on the stator, said stator winding likewise being designed as a rotating field winding,
wherein the rotor has an active region (22), in particular for generating torque when the active region (22) interacts with the magnetic field generated by the stator,
wherein the active region (22) has conductor tracks of a multilayer printed circuit board (1), that is to say of a printed circuit board (1) composed of multiple layers, through which conductor tracks an electric current can flow,
wherein the rotor winding has a lower inductance than the stator winding,
in particular wherein the stator winding has a ferrous coil core and/or a laminated core,
wherein each rotating field winding is fed by a respective inverter (63), that is to say in particular the rotating-part-side and/or rotor-side rotating field winding is fed by a rotating-part-side and/or rotor-side inverter (95) and the stator-side rotating field winding is fed by a stator-side inverter (94),
wherein an electrical frequency $\omega_{S,Soll}$ of the voltage fed from the stator-side inverter (63) to the stator winding, in particular the electrical frequency of the rotating field generated on the stator side, that is to say in particular the stator supply frequency, is determined from the mechanical rotational speed $\Omega$ according to a characteristic curve, in particular wherein the characteristic curve represents a hysteresis-affected dependence of the electrical frequency $\omega_{S,Soll}$ on the mechanical speed,
wherein the characteristic curve is designed such that, in a rotational speed range at least from $\Omega_{min}$ to $\Omega_0$, the magnitude of the stator supply frequency $\omega_S$ is lowered to less than the magnitude of a minimum frequency $\omega_{S,min}$ and/or is lowered to the magnitude of a minimum frequency of zero hertz, in particular wherein the minimum frequency has a constant magnitude in the rotational speed range from $\Omega_{min}$ to $\Omega_0$,
and wherein the characteristic curve is designed such that the magnitude of the supply frequency $\omega_S$ of the stator winding is selected to be greater than the magnitude of the minimum frequency if the mechanical rotational speed $\Omega$ exceeds the second rotational speed $\Omega_0$,
wherein $\Omega_{min}$ is a first rotational speed, and
wherein $\Omega_0$ is a second rotational speed, the magnitude of the second rotational speed $\Omega_0$ being greater than the magnitude of the first rotational speed,
in particular wherein the rotational speed range covered by the hysteresis is limited in terms of magnitude by the magnitude of the first rotational speed $\Omega_{min}$,
wherein the magnitude of the electrical rotor-side supply frequency $\omega_r$ does not fall below the magnitude of a non-

vanishing minimum value $\omega_{r,min}$, in particular in order to ensure an EMF-based rotor position detection,

**characterized in that**

electrical power can be supplied via an inductive coupling to the active region (22), the rotor winding and/or the electronic circuit comprising electronic components mounted on the printed circuit board (1),

wherein the rotor is connected to a secondary winding (61) which is inductively coupled to a primary winding (62) that is connected to the stator in a rotationally fixed manner, wherein a medium-frequency current, preferably having a frequency between 100 and 200 kHz, is impressed in the primary winding (62) by an electrical feed-in which has a gyrator acting as a current source.

2. Method for operating an electric machine (96) which has a rotating part, in particular a rotor, that is movable relative to a stator,

wherein the mechanical speed of the rotating part relative to the stator, in particular the rotational speed of the rotor, is detected or estimated, in particular by control electronics (53, 64),

wherein a winding, that is to say a rotor winding, is arranged on the rotating part, said rotor winding being designed as a rotating field winding,

wherein a stator winding is arranged on the stator, said stator winding likewise being designed as a rotating field winding,

wherein the rotor has an active region (22), in particular for generating torque when the active region (22) interacts with the magnetic field generated by the stator,

wherein the active region (22) has conductor tracks of a multilayer printed circuit board (1), that is to say of a printed circuit board (1) composed of multiple layers, through which conductor tracks an electric current can flow,

wherein the rotor winding is referred to as the first winding if it has a higher inductance than the stator winding, and wherein the stator winding is referred to as the first winding if it has a higher inductance than the rotor winding,

wherein each rotating field winding is fed by a respective inverter (63), that is to say in particular the rotating-part-side and/or rotor-side rotating field winding is fed by a rotating-part-side and/or rotor-side inverter (95) and the stator-side rotating field winding is fed by a stator-side inverter (94),

wherein an electrical frequency $\omega_{S,Soll}$ of the voltage fed from the stator-side inverter (63) to the stator winding, in particular the electrical frequency of the rotating field generated on the stator side, that is to say in particular the stator supply frequency, is determined from the mechanical rotational speed $\Omega$ according to a characteristic curve,

in particular wherein the characteristic curve represents a hysteresis-affected dependence of the electrical frequency $\omega_{S,Soll}$ on the mechanical speed,

wherein the characteristic curve is designed such that, in a rotational speed range at least from $\Omega_{min}$ to $\Omega_0$, the stator supply frequency is lowered to less than a minimum frequency, wherein the supply frequency of the first winding is lowered to a minimum frequency, in particular a minimum frequency that is constant over time,

wherein the electrical rotor-side supply frequency $\omega_r$ and the electrical stator-side supply frequency $\omega_S$ are selected such that the sum of the two supply frequencies corresponds to the desired mechanical rotational speed $\Omega_{Soll}$, that

is to say in particular is $\Omega = \dfrac{\omega_r - \omega_S}{p}$, wherein $\Omega$ is the mechanical rotational speed, p is the number of pole pairs

and $\omega_s$ and $\omega_r$ are respectively the stator-side and rotor-side electrical frequency, and wherein the losses are minimized,

that is to say in particular the available degree of freedom of the proportional composition of the summed supply frequencies is used in such a way that the losses are minimized,

wherein $\Omega_{min}$ is a first rotational speed, and

wherein $\Omega_0$ is a second rotational speed, the magnitude of the second rotational speed $\Omega_0$ being greater than the magnitude of first rotational speed,

and wherein the characteristic curve is designed such that the magnitude of the supply frequency $\omega_s$ of the first winding is selected to be greater than the magnitude of the minimum frequency if the mechanical rotational speed $\Omega$ exceeds the second rotational speed $\Omega_0$,

in particular wherein the rotational speed range covered by the hysteresis is smaller in terms of magnitude than the magnitude of the first rotational speed $\Omega_{min}$,

wherein the electrical rotor-side supply frequency $\omega_r$ does not fall below a minimum value $\omega_{r,min}$, in particular in order to ensure an EMF-based rotor position detection,

**characterized in that**

electrical power can be supplied via an inductive coupling to the active region (22), the rotor winding and/or the electronic circuit comprising electronic components mounted on the printed circuit board (1),

wherein the rotor is connected to a secondary winding (61) which is inductively coupled to a primary winding (62) that is connected to the stator in a rotationally fixed manner, wherein a medium-frequency current, preferably having a frequency between 100 and 200 kHz, is impressed in the primary winding (62) by an electrical feed-in which has a gyrator acting as a current source.

**3.** Method according to claim 1 or 2,
**characterized in that**
the detachment from the minimum frequency takes place when leaving the armature adjustment range, in particular the basic adjustment range, of the rotor winding, that is to say in particular when the mechanical rotational speed $\Omega$ exceeds the second rotational speed $\Omega_0$.

**4.** Method according to at least one of the preceding claims,
**characterized in that**
the required field frequency is realized as far as possible in the rotor winding.

**5.** Method according to at least one of the preceding claims,
**characterized in that**
actuation signals are in each case fed to semiconductor switches of the respective inverter (63) by control electronics (53, 64), the respective control electronics (53, 64) comprising a control device.

**6.** Method according to at least one of the preceding claims,
**characterized in that**
the stator-side control device has a U/f control,
and **in that**
the rotating-part-side or rotor-side control device has a field-oriented control.

**7.** Method according to at least one of the preceding claims,
**characterized in that**
the minimum frequency is 0 Hz,
and/or **in that**
the first rotational speed $Q_{min}$ is selected such that open and/or non-fed-back integrations of the field-oriented, in particular time-discrete, in particular numerically operating, control do not diverge,
and/or **in that**
the first rotational speed $\Omega_{min}$ is selected such that the electrical rotor-side supply frequency $\omega_{r,min}$ being set according to the characteristic curve and the control does not fall below a minimum value, in particular wherein the minimum value is between 1 Hz and 20 Hz, in particular between 10 Hz and 15 Hz,
and/or **in that**
the second rotational speed $\Omega_0$ is the synchronous rotational speed of an electric machine (96) fed from one side,
or **in that** the second rotational speed $\Omega_0$ is equal to half the synchronous rotational speed of the electric machine (96) fed from two sides.

**8.** Method according to at least one of the preceding claims,
**characterized in that**
zero is predefined as the nominal value that is predefined on the rotor side for the magnetization-forming current component, in particular in order to reduce power loss.

**9.** Method according to at least one of the preceding claims,
**characterized in that**
the U/f control, the deviation of the mechanical detected or estimated rotational speed from the predefined rotational speed nominal value is fed to a control element which generates as an output signal the nominal value of the torque-forming current component on the rotor side,
wherein the deviation between this nominal value and the actual value of the torque-forming rotor-side current component is fed to a control element, in particular to an integrator element, from the output signal of which a voltage value is determined, in particular the component of the voltage space vector in the direction of the torque-forming current component, in particular with summing of the $e_q$ signal.

**10.** Method according to at least one of the preceding claims,
**characterized in that**

the field-oriented control comprises integrator elements, from the output signals of which the field orientation angle is determined,

in particular with summing of a component of the current space vector to the space vector represented by the output signals.

11. Electric motor for carrying out a method according to at least one of the preceding claims,

comprising a stator with stator cores (3) and a rotor arranged such as to be able to rotate relative to the stator,

wherein the rotor has an active region (22), in particular for generating torque when the active region (22) interacts with the magnetic field generated by the stator,

wherein the active region (22) has conductor tracks of a multilayer printed circuit board (1), that is to say of a printed circuit board (1) composed of multiple layers, through which conductor tracks an electric current can flow,

wherein an inverter (63) which feeds the active region (22) is arranged on the multilayer printed circuit board (1),

wherein electrical power can be supplied to the inverter (63) from a stator-side primary winding (62) via an inductive coupling,

wherein the conductor tracks of the multilayer printed circuit board (1) form a rotating field winding,

wherein the rotating field winding is designed as a loop winding or wave winding, that is to say in particular not as a concentrated winding,

**characterized in that**

electrical power can be supplied via an inductive coupling to the active region (22), the rotor winding and/or an electronic circuit comprising electronic components mounted on the printed circuit board (1),

wherein the rotor is connected to a secondary winding (61) which is inductively coupled to a primary winding (62) that is connected to the stator, in particular is connected thereto in a rotationally fixed manner,

wherein a medium-frequency current, preferably having a frequency between 100 and 200 kHz, is impressed in the primary winding (62) by an electrical feed-in which has a gyrator acting as a current source.

12. Electric motor (96) according to claim 11,

**characterized in that**

the printed circuit board (1) is connected to the rotor in a rotationally fixed manner,

in particular wherein the printed circuit board (1) is connected to a shaft portion of the rotor in a rotationally fixed manner,

in particular wherein the rotor is mounted via bearings (5, 6) which are accommodated in a part, in particular a housing part, which are fixedly connected to the stator, in particular to the stator cores (3),

and/or **in that**

the conductor tracks of the multilayer printed circuit board (1) form a rotating field winding,

and/or **in that**

the stator has permanent magnets, in particular the magnetization direction of which are oriented in each case parallel to the axis of rotation of the rotor, in particular are oriented axially,

and/or **in that**

the stator has a stator winding for generating a rotating field, in particular wherein the stator winding is a rotating field winding,

and/or **in that**

the conductor tracks arranged in the active region (22) run radially and/or extend radially.

13. Electric motor (96) according to claim 11 or 12,

**characterized in that**

in each case a deflection region (21, 26) adjoins the active region (22) radially on the inside and radially on the outside,

in particular wherein the conductor tracks of a respective layer in a deflection region (21, 26) in each case end in an axially directed through-contacting, in particular an axially directed through-contacted bore of the printed circuit board (1), in particular in order to electrically connect conductor tracks of different layers.

14. Electric motor (96) according to one of the preceding claims 11 to 13,

**characterized in that**

the stator has one or two stator cores (3) located axially opposite one another,

in particular wherein the active region (22) is arranged axially between the two stator cores (3),

in particular wherein the two stator cores (3) have with respect to one another a non-vanishing offset angle in the circumferential direction relative to one another,

and/or **in that**

tooth-like protrusions are formed on the stator core (3), said protrusions being regularly spaced apart from one another in the circumferential direction, in particular being arranged at an equal radial spacing,

wherein the stator winding has individual windings (71), in particular is formed of individual windings (71),

wherein each individual winding (71) is arranged in a manner pushed onto a respective tooth-like protrusion,

in particular wherein the magnetic field generated from the individual windings (71) is directed substantially axially,

in particular wherein the main field of the magnetic field generated from the individual windings (71) is directed axially,

and/or **in that**

the respective stator core (3) is pot-shaped, the tooth-like protrusions forming the pot edge,

in particular wherein the stator core (3) is in each case made of SMC material,

and/or **in that**

the printed circuit board (1) has a circular radial outer edge,

and/or **in that**

the conductor tracks are made of copper or of a copper-containing material and/or the conductor tracks of the inner layers of the printed circuit board (1) are embedded in an electrically insulating carrier material, in particular wherein the carrier material comprises at least epoxy resin, and/or **in that**

the printed circuit board (1) is equipped with electronic components of an electronic circuit, in particular are arranged at a smaller radial spacing than the active region (22) and/or are arranged as the deflection regions (21, 26).

15. Electric motor (96) according to one of the preceding claims 11 to 14,
   **characterized in that**

the secondary winding (61) is axially spaced apart from the printed circuit board (1),

in particular wherein the secondary winding (61) and the primary winding (62) are designed as ring windings, the winding axis thereof in particular being oriented parallel to the rotor axis,

in particular wherein the feed-in has a gyrator, in particular wherein the gyrator is designed as a quadrupole and has at least one such capacitance and at least one such inductance that the associated resonant frequency is substantially equal to the impressed medium frequency, wherein, if an alternating voltage source having an alternating voltage that has the resonant frequency is arranged on the input side, then the gyrator represents a current source on the output side,

in particular wherein a capacitance is connected in series or in parallel with the secondary winding (61) so that the associated resonant frequency substantially corresponds to the medium frequency,

and/or **in that**

electrical power can be supplied to the active region (22), the rotor winding and/or the electronic circuit via a loop power supply, in particular a multi-phase loop power supply.


**Revendications**

1. Procédé pour faire fonctionner une machine électrique (96) qui présente un induit, en particulier un rotor, mobile par rapport à un stator,

sachant que la vitesse mécanique relative de l'induit par rapport au stator, en particulier la vitesse de rotation du rotor, est détectée ou estimée, en particulier par un système électronique de commande (53, 64),

sachant qu'un bobinage, donc un bobinage de rotor, qui est réalisé sous la forme d'un enroulement à champ magnétique rotatif, est disposé sur l'induit,

sachant qu'un bobinage de stator, qui est lui aussi réalisé sous la forme d'un enroulement à champ magnétique rotatif, est disposé sur le stator,

sachant que le rotor présente une région active (22), en particulier pour la production de couple lors de l'interaction de la région active (22) avec le champ magnétique produit par le stator,

sachant que la région active (22) présente des pistes conductrices, pouvant être alimentées en courant électrique, d'une carte imprimée multicouche (1), en particulier donc d'une carte imprimée (1) à plusieurs couches,

sachant que le bobinage de rotor présente une plus faible inductance que le bobinage de stator,

sachant en particulier que le bobinage de stator présente un noyau de bobine ferreux et/ou un empilage de tôles,

sachant que chaque enroulement à champ magnétique rotatif est alimenté par un convertisseur respectif (63), en particulier donc l'enroulement à champ magnétique rotatif côté induit et/ou rotor par un convertisseur côté induit et/ou rotor (95) et l'enroulement à champ magnétique rotatif côté stator par un convertisseur côté stator (94),

sachant qu'à partir de la vitesse mécanique $\Omega$, on détermine d'après une courbe caractéristique une fréquence électrique $\omega_S$, théorique de la tension fournie au bobinage de stator par le convertisseur (63) côté stator, en particulier la fréquence électrique du champ magnétique produit côté stator, en particulier donc la fréquence d'alimentation de stator,

sachant en particulier que la courbe caractéristique représente une dépendance à hystérésis de la fréquence élec-

trique $\omega_S$, théorique par rapport à la vitesse mécanique, sachant que la courbe caractéristique est telle que, dans une plage de vitesse de rotation allant au moins de $\Omega_{min}$ à $\Omega_0$, la valeur de la fréquence d'alimentation de stator $\omega_S$ est abaissée en dessous de la valeur d'une fréquence minimale $\omega_{s,\,min}$ et/ou est abaissée à la valeur d'une fréquence minimale de zéro Hertz, sachant en particulier que la fréquence minimale présente une valeur constante dans la plage de vitesse de rotation de $\Omega_{min}$ à $\Omega_0$, et sachant que la courbe caractéristique est telle que la valeur de la fréquence d'alimentation $\omega_S$ du bobinage de stator est choisie supérieure à la valeur de la fréquence minimale lorsque la vitesse mécanique $\Omega$ dépasse la deuxième vitesse de rotation $\Omega_0$, sachant que $\Omega_{min}$ est une première vitesse de rotation et

sachant que $\Omega_0$ est une deuxième vitesse de rotation, sachant que la valeur de la deuxième vitesse de rotation $\Omega_0$ est supérieure à la valeur de la première vitesse de rotation,

sachant en particulier que la valeur de la plage de vitesse de rotation couverte par l'hystérésis est limitée par la valeur de la première vitesse de rotation $\Omega_{min}$,

sachant que la valeur de la fréquence d'alimentation électrique $\omega_r$ côté rotor ne tombe pas en dessous du montant d'une valeur minimale non infiniment petite $\omega_{r,\,min}$, en particulier afin de garantir une détection de la position du rotor fondée sur la force électromotrice,

**caractérisé en ce que** de l'énergie électrique peut, par l'intermédiaire d'un couplage inductif, être apportée à la région active (22), au bobinage de rotor et/ou au circuit électronique présentant des composants électroniques équipés sur la carte imprimée (1), sachant que le rotor est relié à un bobinage secondaire (61) qui est couplé par induction à un bobinage primaire (62) lié en rotation au stator,

sachant qu'une alimentation électrique, qui présente un gyrateur jouant le rôle de source de courant, injecte dans le bobinage primaire (62) un courant à moyenne fréquence, de préférence avec une fréquence comprise entre 100 et 200 kHz.

2. Procédé pour faire fonctionner une machine électrique (96) qui présente un induit, en particulier un rotor, mobile par rapport à un stator,

sachant que la vitesse mécanique relative de l'induit par rapport au stator, en particulier la vitesse de rotation du rotor, est détectée ou estimée, en particulier par un système électronique de commande (53, 64),

sachant qu'un bobinage, donc un bobinage de rotor, qui est réalisé sous la forme d'un enroulement à champ magnétique rotatif, est disposé sur l'induit,

sachant qu'un bobinage de stator, qui est lui aussi réalisé sous la forme d'un enroulement à champ magnétique rotatif, est disposé sur le stator,

sachant que le rotor présente une région active (22), en particulier pour la production de couple lors de l'interaction de la région active (22) avec le champ magnétique produit par le stator,

sachant que la région active (22) présente des pistes conductrices, pouvant être alimentées en courant électrique, d'une carte imprimée multicouche (1), en particulier donc d'une carte imprimée (1) à plusieurs couches,

sachant que le bobinage de rotor est appelé premier bobinage s'il présente une plus grande inductance que le bobinage de stator et

sachant que le bobinage de stator est appelé premier bobinage s'il présente une plus grande inductance que le bobinage de rotor,

sachant que chaque enroulement à champ magnétique rotatif est alimenté par un convertisseur respectif (63), en particulier donc l'enroulement à champ magnétique rotatif côté induit et/ou rotor par un convertisseur côté induit et/ou rotor (95) et l'enroulement à champ magnétique rotatif côté stator par un convertisseur côté stator (94),

sachant qu'à partir de la vitesse mécanique $\Omega$, on détermine d'après une courbe caractéristique une fréquence électrique $\omega_S$ théorique de la tension fournie au bobinage de stator par le convertisseur (63) côté stator, en particulier la fréquence électrique du champ magnétique produit côté stator, en particulier donc la fréquence d'alimentation de stator,

sachant en particulier que la courbe caractéristique représente une dépendance à hystérésis de la fréquence électrique $\omega_S$, théorique par rapport à la vitesse mécanique, sachant que la courbe caractéristique est telle que la fréquence d'alimentation de stator est abaissée en dessous d'une fréquence minimale dans une plage de vitesse de rotation au moins de $\Omega_{min}$ à $\Omega_0$,

sachant que la fréquence d'alimentation du premier bobinage est abaissée à une fréquence minimale, en particulier une fréquence minimale constante dans le temps, sachant que la fréquence minimale électrique $\omega_r$ côté rotor et la fréquence d'alimentation électrique $\omega_S$ côté stator sont choisies de telle sorte que le total des deux fréquences d'alimentation correspond à la vitesse de rotation mécanique souhaitée $\Omega_{théorique}$, en particulier donc $\Omega = (\omega_r - \omega_S) / p,$

sachant que $\Omega$ est la vitesse de rotation mécanique, $p$ le nombre de paires de pôles et $\omega_S$ respectivement $\omega_r$ la fréquence électrique côté stator respectivement côté rotor, et sachant que les pertes sont minimisées,

en particulier donc que le degré de liberté disponible de la composition proportionnelle des fréquences d'alimentation totalisées est utilisé de manière à minimiser les pertes, sachant que $\Omega_{min}$ est une première vitesse de rotation et

sachant que $\Omega_0$ est une deuxième vitesse de rotation, sachant que la valeur de la deuxième vitesse de rotation $\Omega_0$ est supérieure à la valeur de la première vitesse de rotation,

et sachant que la courbe caractéristique est telle que la valeur de la fréquence d'alimentation $\omega_S$ du premier bobinage est choisie supérieure à la valeur de la fréquence minimale lorsque la vitesse de rotation mécanique $\Omega$ dépasse la deuxième vitesse de rotation $\Omega_0$,

sachant en particulier que la valeur de la plage de vitesse de rotation couverte par l'hystérésis est inférieure à la valeur de la première vitesse de rotation $\Omega_{min}$,

sachant que la fréquence d'alimentation électrique $\omega_r$ côté rotor ne tombe pas en dessous d'une valeur minimale $\omega_{r,\ min}$, en particulier afin de garantir une détection de la position du rotor fondée sur la force électromotrice,

**caractérisé en ce que** de l'énergie électrique peut, par l'intermédiaire d'un couplage inductif, être apportée à la région active (22), au bobinage de rotor et/ou au circuit électronique présentant des composants électroniques équipés sur la carte imprimée (1), sachant que le rotor est relié à un bobinage secondaire (61) qui est couplé par induction à un bobinage primaire (62) lié en rotation au stator,

sachant qu'une alimentation électrique, qui présente un gyrateur jouant le rôle de source de courant, injecte dans le bobinage primaire (62) un courant à moyenne fréquence, de préférence avec une fréquence comprise entre 100 et 200 kHz.

3. Procédé selon la revendication 1 ou 2, **caractérisé en ce qu'**on se détache de la fréquence minimale lorsqu'on quitte la plage de réglage d'armature, en particulier la plage de réglage de base, du bobinage de rotor, en particulier donc lorsque la vitesse de rotation mécanique $\Omega$ dépasse la deuxième vitesse de rotation $\Omega_0$.

4. Procédé selon au moins une des revendications précédentes, **caractérisé en ce que** la fréquence de champ nécessaire est si possible réalisée dans le bobinage de rotor.

5. Procédé selon au moins une des revendications précédentes, **caractérisé en ce que** des signaux d'asservissement sont respectivement apportés par un système électronique de commande (53, 64) à des commutateurs à semi-conducteurs du convertisseur respectif (63), sachant que le système électronique de commande respectif (53, 64) présente un dispositif de régulation.

6. Procédé selon au moins une des revendications précédentes, **caractérisé en ce que** le dispositif de régulation côté stator présente une commande U/f,
et **en ce que** le dispositif de régulation côté induit ou côté rotor présente une régulation à orientation de champ.

7. Procédé selon au moins une des revendications précédentes, **caractérisé en ce que** la fréquence minimale est 0 Hz et/ou **en ce que** la première vitesse de rotation $\Omega_{min}$ est choisie de telle sorte que des intégrations ouvertes et/ou sans rétroaction de la régulation à orientation de champ, en particulier réalisée de manière discrète dans le temps, en particulier fonctionnant de manière numérique, ne divergent pas,
et/ou **en ce que** la première vitesse de rotation $\Omega_{min}$ est choisie de telle sorte que la fréquence d'alimentation électrique $\omega_{r,\ min}$ côté rotor qui s'établit d'après la courbe caractéristique et la régulation ne tombe pas en dessous d'une valeur minimale, sachant en particulier que la valeur minimale est comprise entre 1 Hz et 20 Hz, en particulier entre 10 Hz et 15 Hz,
et/ou **en ce que** la deuxième vitesse de rotation $\Omega_0$ est la vitesse de rotation synchrone d'une machine électrique (96) à alimentation unilatérale
ou **en ce que** la deuxième vitesse de rotation $\Omega_0$ est égale à la moitié de la vitesse de rotation synchrone de la machine électrique (96) à alimentation bilatérale.

8. Procédé selon au moins une des revendications précédentes, **caractérisé en ce qu'**on prédéfinit zéro comme valeur théorique prédéfinie côté rotor pour la part de courant formatrice de magnétisation, en particulier afin de réduire la puissance dissipée.

9. Procédé selon au moins une des revendications précédentes, **caractérisé en ce que** la commande U/f apporte l'écart de la vitesse de rotation mécanique détectée ou estimée par rapport à la valeur théorique prédéfinie de vitesse de rotation à un organe régulateur qui produit comme signal de sortie la valeur théorique de la part de courant formatrice de couple côté rotor,
sachant que l'écart entre cette valeur théorique et la valeur réelle de la part de courant formatrice de couple côté rotor est apportée à un organe régulateur, en particulier un organe intégrateur, à partir du signal de sortie duquel on détermine, en particulier en totalisant le signal $e_q$, une valeur de tension, en particulier la composante du vecteur spatial de tension dans la direction de la part de courant formatrice de couple.

**10.** Procédé selon au moins une des revendications précédentes, **caractérisé en ce que** la régulation à orientation de champ présente des organes intégrateurs à partir des signaux de sortie desquels on détermine l'angle d'orientation de champ,

en particulier en totalisant une part du vecteur spatial de courant sur le vecteur spatial représenté par les signaux de sortie.

**11.** Moteur électrique (96) pour la mise en oeuvre d'un procédé selon au moins une des revendications précédentes, présentant un stator avec des noyaux de stator (3) et un rotor disposé à rotation par rapport au stator,

sachant que le rotor présente une région active (22), en particulier pour la production de couple lors de l'interaction de la région active (22) avec le champ magnétique produit par le stator,

sachant que la région active (22) présente des pistes conductrices, pouvant être alimentées en courant électrique, d'une carte imprimée multicouche (1), en particulier donc d'une carte imprimée (1) à plusieurs couches,

sachant qu'un convertisseur (63), qui alimente la région active (22), est disposé sur la carte imprimée multicouche (1),

sachant que de l'énergie électrique peut, par l'intermédiaire d'un couplage inductif, être apportée au convertisseur (63) par un bobinage primaire (62) côté stator,

sachant que les pistes conductrices de la carte imprimée multicouche (1) forment un enroulement à champ magnétique rotatif,

sachant que l'enroulement à champ magnétique rotatif est réalisé sous la forme d'un enroulement en boucle ou d'un enroulement ondulé, en particulier donc pas sous la forme d'un enroulement concentré,

**caractérisé en ce que** de l'énergie électrique peut, par l'intermédiaire d'un couplage inductif, être apportée à la région active (22), au bobinage de rotor et/ou à un circuit électronique présentant des composants électroniques équipés sur la carte imprimée (1), sachant que le rotor est relié à un bobinage secondaire (61) qui est couplé par induction à un bobinage primaire (62) relié, en particulier lié en rotation, au stator,

sachant qu'une alimentation électrique, qui présente un gyrateur jouant le rôle de source de courant, injecte dans le bobinage primaire (62) un courant à moyenne fréquence, de préférence avec une fréquence comprise entre 100 et 200 kHz.

**12.** Moteur électrique (96) selon la revendication 11, **caractérisé en ce que** la carte imprimée (1) est liée en rotation au rotor,

sachant en particulier que la carte imprimée (1) est liée en rotation à une partie d'arbre du rotor,

sachant en particulier que le rotor est monté au moyen de paliers (5, 6) qui sont reçus dans un élément, en particulier un élément de carter, qui est fixement relié au stator, en particulier aux noyaux de stator (3),

et/ou **en ce que** les pistes conductrices de la carte imprimée multicouche (1) forment un enroulement à champ magnétique rotatif,

et/ou **en ce que** le stator présente des aimants permanents, en particulier dont les directions de magnétisation sont respectivement orientées parallèlement à l'axe de rotation du rotor, en particulier sont orientées axialement,

et/ou **en ce que** le stator présente un bobinage de stator afin de produire un champ magnétique rotatif, sachant en particulier que le bobinage de stator est un enroulement à champ magnétique rotatif,

et/ou **en ce que** les pistes conductrices disposées dans la région active (22) s'étendent radialement et/ou se développent radialement.

**13.** Moteur électrique (96) selon la revendication 11 ou 12, **caractérisé en ce qu'**une région de renvoi (21, 26) se raccorde respectivement radialement à l'intérieur et radialement à l'extérieur à la région active (22),

sachant en particulier que les pistes conductrices d'une couche respective se terminent respectivement, dans une région de renvoi (21, 26), dans une mise en contact orientée axialement, en particulier un trou métallisé orienté axialement, de la carte imprimée (1), en particulier pour la connexion électrique de pistes conductrices de différentes couches.

**14.** Moteur électrique (96) selon l'une des revendications précédentes 11 à 13, **caractérisé en ce que** le stator présente un ou deux noyaux de stator (3) se faisant axialement face,

sachant en particulier que la région active (22) est disposée axialement entre les deux noyaux de stator (3),

sachant en particulier que les deux noyaux de stator (3) présentent en direction périphérique l'un par rapport à l'autre un angle de décalage mutuel non infiniment petit, et/ou **en ce que** des saillies du genre dents sont formées sur le noyau de stator (3), qui sont régulièrement distantes les unes des autres en direction périphérique, et en particulier qui sont disposées à la même distance radiale,

sachant que le bobinage de stator présente des enroulements individuels (71), en particulier est constitué d'enroulements individuels (71),

sachant que chaque enroulement individuel (71) est disposé emmanché sur une saillie respective du genre dent,

sachant en particulier que le champ magnétique produit à partir des enroulements individuels (71) est orienté pour l'essentiel axialement,

sachant en particulier que le champ principal du champ magnétique produit à partir des enroulements individuels (71) est orienté axialement,

et/ou **en ce que** le noyau de stator respectif (3) est façonné en forme de pot, sachant que les saillies du genre dents forment le bord du pot,

sachant en particulier que le noyau de stator (3) est respectivement fabriqué en matériau SMC,

et/ou **en ce que** la carte imprimée (1) présente un bord extérieur radial circulaire,

et/ou **en ce que** les pistes conductrices sont en cuivre ou en un matériau à teneur en cuivre, et/ou les pistes conductrices des couches intérieures de la carte imprimée (1) sont noyées dans un matériau support électriquement isolant, sachant en particulier que le matériau support présente au moins de la résine époxy,

et/ou **en ce que** la carte imprimée (1) est équipée de composants électroniques d'un circuit électronique, en particulier qui sont disposés à une plus petite distance radiale que la région active (22) et/ou que les régions de renvoi (21, 26),

**15.** Moteur électrique (96) selon l'une des revendications précédentes 11 à 14, **caractérisé en ce que** le bobinage secondaire (61) est axialement distant de la carte imprimée (1),

sachant en particulier que le bobinage secondaire (61) et le bobinage primaire (62) sont réalisés sous la forme de bobinages annulaires, en particulier dont l'axe de bobinage est orienté parallèlement à l'axe du rotor,

sachant en particulier que l'alimentation présente un gyrateur, sachant en particulier que le gyrateur est réalisé sous forme de quadripôle et présente au moins une capacité et au moins une inductance telles que la fréquence de résonance correspondante est au moins pour l'essentiel égale à la fréquence moyenne injectée, sachant que, lorsque la source de tension alternative dont la tension alternative présente la fréquence de résonance est disposée du côté d'entrée, le gyrateur constitue une source de courant du côté de sortie, sachant en particulier qu'une capacité est mise en circuit en série ou en parallèle avec le bobinage secondaire (61), de sorte que la fréquence de résonance correspondante correspond pour l'essentiel à la fréquence moyenne,

et/ou **en ce que** de l'énergie électrique peut être apportée à la région active (22), au bobinage de rotor et/ou au circuit électronique par l'intermédiaire d'une alimentation en boucle, en particulier une alimentation en boucle polyphasée.

Fig.1

Fig.2

EP 2 901 547 B1

Fig.3

21 →

22 →

26 →

EP 2 901 547 B1

Fig.4

EP 2 901 547 B1

Fig.5

Fig.6

Fig. 7

Fig. 8

Fig.9

Fig.10

EP 2 901 547 B1

Fig.11

Fig.12

EP 2 901 547 B1

Fig.13

EP 2 901 547 B1

Fig.14

EP 2 901 547 B1

Fig.15

Fig.16

EP 2 901 547 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19505006 A1
- EP 0884835 A1
- DE 19756955 A1
- EP 0918012 A2
- GB 1439372 A
- WO 2012101630 A1

**In der Beschreibung aufgeführte Nicht-Patentliteratur**

- **PODDAR, G. ; RANGANATHAN, V.T.** Sensorless double-inverterfed wound-rotor induction-Machine drive. *IEEE Transactions on Industrial Electronics,* Februar 2005, vol. 53 (1), 86-95
- *Sensitivity of the Currents Input-Output Decoupling Vector Control of the DFIM versus Current Sensors Fault,* 2008